# EUROPEAN PATENT SPECIFICATION

(11) **EP 4 253 232 B1**
(45) Date of publication and mention of the grant of the patent: **15.01.2025**
(21) Application number: 23163963.4
(22) Date of filing: 24.03.2023
(51) Int. Cl.: B64C 29/00, B64D 27/04, B64D 31/06

(54) **CONTROL APPARATUS FOR AIRCRAFT**
STEUERVORRICHTUNG FÜR FLUGZEUGE
APPAREIL DE COMMANDE POUR AÉRONEF

(30) Priority: 30.03.2022 JP 2022054779
(43) Date of publication of application: 04.10.2023
(73) Proprietor: HONDA MOTOR CO., LTD., Minato-ku Tokyo 107-8556 (JP)
(72) Inventor: TSUTSUMI, Daiko, Saitama, 351-0193 (JP); ETO, Masashi, Saitama, 351-0193 (JP)
(74) Representative: Weickmann & Weickmann PartmbB

(56) References cited:
- WO-A1-2021/089948
- US-A1- 2021 024 223
- US-A1- 2021 138 913
- US-A1- 2021 281 210
- US-A1- 2021 370 786

## Description

### BACKGROUND OF THE INVENTION

### FIELD OF THE INVENTION

The present invention relates to a control apparatus for an aircraft.

### DESCRIPTION OF THE RELATED ART

WO 2021/089948 A1 discloses a hybrid propulsion architecture. The hybrid propulsion architecture includes four electric propulsion systems. Each electric propulsion system includes an electric motor that drives a propeller. The hybrid propulsion architecture includes, as a power source, a first power source that includes a power generator, and a second power source that includes a battery. The first power source is provided to the four electric propulsion systems, and supplies electric power to the four electric propulsion systems. The second power source is provided to each electric propulsion system, and supplies electric power to the corresponding electric propulsion system. US 2021/138913 A1 relates to an electrical system, and, more particularly, to an electrical system for an aircraft comprising one or more energy sinks and a hybrid energy storage system.

### SUMMARY OF THE INVENTION

In the technology disclosed in WO 2021/089948 A1, in a case where the total required electric power for each electric propulsion system exceeds the electric power that can be supplied from the first power source, electric power is supplied from each second power source to the corresponding electric propulsion system. In a case where there is a difference among the remaining capacities of batteries of the respective second power sources, there is a problem that there is insufficient electric power for some of the electric propulsion systems, despite sufficient electric power being able to be supplied to some of the other electric propulsion systems.

The present invention has been devised to solve the aforementioned problem.

An aspect of the present invention is a control apparatus for an aircraft, the aircraft including: at least one power generator configured to generate electric power; at least one first battery configured to store electric power; at least one first electric motor configured to operate using electric power supplied from the power generator and the first battery; at least one first diode including an anode connected to a side of the power generator, and a cathode connected to a side of the first battery; at least one second battery configured to store electric power; at least one second electric motor configured to operate using electric power supplied from the power generator and the second battery; at least one second diode including an anode connected to the side of the power generator, and a cathode connected to a side of the second battery; and a plurality of rotors configured to generate thrust acting on a fuselage. The control apparatus comprises: an electric motor control section configured to control each of the first electric motor and the second electric motor; and a battery monitoring section configured to monitor a state of charge of each of the first battery and the second battery. Each of the rotors is driven by one of the first electric motor or the second electric motor, or by both the first electric motor and the second electric motor. In a case where the electric motor control section determines that a difference between the state of charge of the first battery and the state of charge of the second battery is greater than or equal to a first prescribed value, and the state of charge of the first battery is lower than the state of charge of the second battery, the electric motor control section is configured to decrease thrust generated due to the first electric motor driving the rotor to reduce consumed electric power of the first electric motor and also to increase thrust generated due to the second electric motor driving the rotor, compared to a case where the difference between the state of charge of the first battery and the state of charge of the second battery is less than the first prescribed value.

According to the present invention, the SOCs of the batteries can be made approximately equal.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic view of an aircraft;
FIG. 2 is a schematic view showing a configuration of a power supply system;
FIG. 3 is a control block diagram of a flight controller;
FIG. 4 is a flow chart showing a process of output power control;
FIG. 5 is a schematic view of the power supply system;
FIG. 6 is a schematic view of the power supply system;
FIG. 7 is a graph showing change over time of the SOC of each battery;
FIG. 8 is a flow chart showing a process of output power control;
FIG. 9 is a schematic view of the power supply system;
FIG. 10 is a schematic view of the power supply system;
FIG. 11 is a graph showing change over time of the SOC of each battery;
FIG. 12 is a schematic view of the power supply system;
FIG. 13 is a schematic view of the power supply system; and
FIG. 14 is a graph showing change over time of the SOC of each battery.

### DETAILED DESCRIPTION OF THE INVENTION

### [First Embodiment]

### [Configuration of Aircraft]

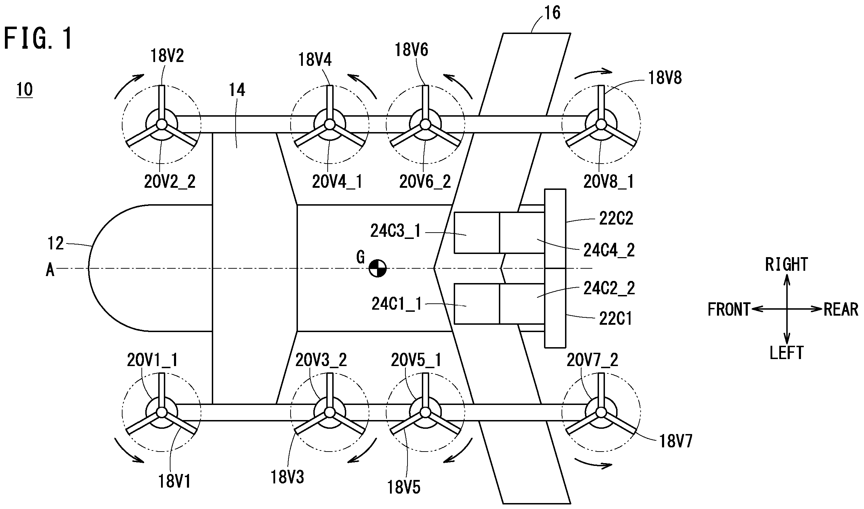

FIG. 1 is a schematic view of an aircraft 10. The aircraft 10 of the present embodiment is an electric vertical take-off and landing aircraft (eVTOL aircraft). The aircraft 10 includes rotors that are driven by electric motors. The aircraft 10 generates thrust in a vertical direction and thrust in a horizontal direction with the rotors. The aircraft 10 is a hybrid aircraft. The aircraft 10 includes a power generator and a battery, as a power source for the electric motor. The aircraft 10 supplies the electric power generated by the power generator to the electric motor. If the electric power generated by the power generator is insufficient for the required electric power, the electric power stored in the battery is supplied to the electric motor.

The aircraft 10 includes a fuselage 12. The fuselage 12 is provided with a cockpit, a cabin, and the like. A pilot rides in the cockpit, and steers the aircraft 10. Passengers or the like ride in the cabin. The aircraft 10 may be steered in an automated manner.

The aircraft 10 includes a front wing 14 and a rear wing 16. When the aircraft 10 moves forward, the front wing 14 and the rear wing 16 each generate lift.

The aircraft 10 includes eight VTOL rotors 18V. The eight VTOL rotors 18V are a rotor 18V1, a rotor 18V2, a rotor 18V3, a rotor 18V4, a rotor 18V5, a rotor 18V6, a rotor 18V7, and a rotor 18V8.

The rotor 18V1, the rotor 18V3, the rotor 18V5, and the rotor 18V7 are arranged on the left side of a center line A of the fuselage 12 in the left-right direction. The rotor 18V2, the rotor 18V4, the rotor 18V6, and the rotor 18V8 are arranged on the right side of the center line A. That is, four VTOL rotors 18V are arranged on the left side of the center line A, and four VTOL rotors 18V are arranged on the right side of the center line A. The VTOL rotors 18V correspond to vertical rotors of the present invention.

The center of gravity G of the aircraft 10 is positioned on the center line A of the fuselage 12. When the aircraft 10 is viewed from above, the center of gravity G is positioned between the rotor 18V4 and the rotor 18V6 in the front-rear direction of the fuselage 12. Furthermore, the center of gravity G is positioned between the rotor 18V3 and the rotor 18V5 in the front-rear direction of the fuselage 12.

When the aircraft 10 is viewed from above, the rotor 18V8 is provided at a position having point symmetry with the rotor 18V1, with respect to the center of gravity G. The rotor 18V7 is provided at a position having point symmetry with the rotor 18V2, with respect to the center of gravity G. The rotor 18V6 is provided at a position having point symmetry with the rotor 18V3, with respect to the center of gravity G. The rotor 18V5 is provided at a position having point symmetry with the rotor 18V4, with respect to the center of gravity G.

One VTOL electric motor 20V is provided for each VTOL rotor 18V. Specifically, an electric motor 20V1_1 is provided for the rotor 18V1. An electric motor 20V2_2 is provided for the rotor 18V2. An electric motor 20V3_2 is provided for the rotor 18V3. An electric motor 20V4_1 is provided for the rotor 18V4. An electric motor 20V5_1 is provided for the rotor 18V5. An electric motor 20V6_2 is provided for the rotor 18V6. An electric motor 20V7_2 is provided for the rotor 18V7. An electric motor 20V8_1 is provided for the rotor 18V8. Each VTOL rotor 18V is driven by the corresponding VTOL electric motor 20V.

Each VTOL rotor 18V generates thrust mainly in the upward direction of the fuselage 12. The thrust of each VTOL rotor 18V is controlled by adjusting the rotational speed of the rotor and the pitch angle of the blades. If other conditions such as the blade pitch angle are constant, the greater the output power of the VTOL electric motor 20V the greater the thrust generated by the VTOL rotor 18V. Each VTOL rotor 18V is used mainly during vertical takeoff, during a transition from vertical takeoff to cruising, during a transition from cruising to vertical landing, during vertical landing, during hovering, and the like. Furthermore, each VTOL rotor 18V is used during attitude control.

The propulsion force is applied to the fuselage 12 mainly in the upward direction, by controlling the thrust of each VTOL rotor 18V. The roll moment, pitch moment, and yaw moment are applied to the fuselage 12 by controlling the thrust of each VTOL rotor 18V.

The aircraft 10 includes two cruise rotors 22C. The two cruise rotors 22C are a rotor 22C1 and a rotor 22C2. The rotor 22C1 and the rotor 22C2 are attached to a rear portion of the fuselage 12. The rotor 22C1 is arranged on the left side of the center line A. The rotor 22C2 is arranged on the right side of the center line A. That is, one cruise rotor 22C is arranged on the left side of the center line A, and one cruise rotor 22C is arranged on the right side of the center line A. The cruise rotors 22C correspond to horizontal rotors of the present invention.

Two cruise electric motors 24C are provided for each cruise rotor 22C. Specifically, an electric motor 24C1_1 and an electric motor 24C2_2 are provided for the rotor 22C1. An electric motor 24C3_1 and an electric motor 24C4_2 are provided for the rotor 22C2. Each single cruise rotor 22C is driven by two cruise electric motors 24C.

Each cruise rotor 22C generates thrust mainly in the forward direction of the fuselage 12. The thrust of each cruise rotor 22C is controlled by adjusting the rotational speed of the rotor and the pitch angle of the blades. If other conditions such as the blade pitch angle are constant, the greater the output power of the cruise electric motor 24C the greater the thrust generated by the cruise rotor 22C. Each cruise rotor 22C is used mainly during a transition from vertical takeoff to cruising, during cruising, during a transition from cruising to vertical landing, and the like. The propulsion force is applied to the fuselage 12 mainly in the forward direction, by controlling the thrust of each cruise rotor 22C.

### [Configuration of Power Supply System]

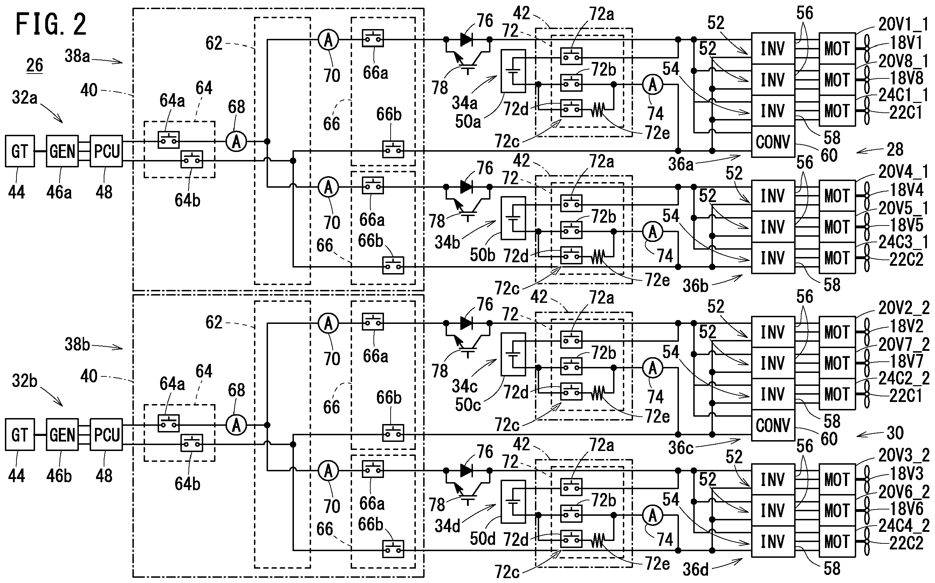

FIG. 2 is a schematic view of a configuration of a power supply system 26.

The aircraft 10 includes, as a drive source of a first drive system 28, the electric motor 20V1_1, the electric motor 20V4_1, the electric motor 20V5_1, the electric motor 20V8_1, the electric motor 24C1_1, and the electric motor 24C3_1. In the following, the electric motor 20V1_1, the electric motor 20V4_1, the electric motor 20V5_1, and the electric motor 20V8_1 may be referred to as the VTOL electric motors 20V of the first drive system 28. Furthermore, the electric motor 24C1_1 and the electric motor 24C3_1 may be referred to as the cruise electric motors 24C of the first drive system 28. The VTOL electric motors 20V of the first drive system 28 and the cruise electric motors 24C of the first drive system 28 correspond to first electric motors of the present invention.

The aircraft 10 includes, as a drive source of a second drive system 30, the electric motor 20V2_2, the electric motor 20V3_2, the electric motor 20V6_2, the electric motor 20V7_2, the electric motor 24C2_2, and the electric motor 24C4_2. In the following, the electric motor 20V2_2, the electric motor 20V3_2, the electric motor 20V6_2, and the electric motor 20V7_2 may be referred to as the VTOL electric motors 20V of the second drive system 30. Furthermore, the electric motor 24C2_2 and the electric motor 24C4_2 may be referred to as the cruise electric motors 24C of the second drive system 30. The VTOL electric motors 20V of the second drive system 30 and the cruise electric motors 24C of the second drive system 30 correspond to second electric motors of the present invention.

The power supply system 26 includes two main power source apparatuses 32 and four auxiliary power source apparatuses 34. The power supply system 26 supplies electric power to four load modules 36.

The two main power source apparatuses 32 are a first main power source apparatus 32a and a second main power source apparatus 32b. The four auxiliary power source apparatuses 34 are a first auxiliary power source apparatus 34a, a second auxiliary power source apparatus 34b, a third auxiliary power source apparatus 34c, and a fourth auxiliary power source apparatus 34d. The four load modules 36 are a first load module 36a, a second load module 36b, a third load module 36c, and a fourth load module 36d.

The power supply system 26 includes two power supply circuits 38. The two power supply circuits 38 are a first power supply circuit 38a and a second power supply circuit 38b. The first power supply circuit 38a and the second power supply circuit 38b are provided independently, and are not connected to each other.

Each power supply circuit 38 includes a main power source circuit 40 and an auxiliary power source circuit 42. The main power source circuit 40 is provided for each main power source apparatus 32. The auxiliary power source circuit 42 is provided for each auxiliary power source apparatus 34.

Each main power source apparatus 32 includes a gas turbine 44, a power generator 46, and a power control unit (referred to below as a PCU) 48. The gas turbine 44 drives the power generator 46. Due to this, the power generator 46 generates electric power. The PCU 48 converts AC power generated by the power generator 46 into DC power, and outputs this DC power to the main power source circuit 40. When the gas turbine 44 is started, the PCU 48 converts DC power supplied by the main power source circuit 40 into AC power, and outputs this AC power to the power generator 46. The power generator 46 operates due to the AC power input from the PCU 48, such that the power generator 46 drives the gas turbine 44.

In the following, the power generator 46 in the first main power source apparatus 32a may be referred to as a first power generator 46a. The power generator 46 in the second main power source apparatus 32b may be referred to as a second power generator 46b.

Each auxiliary power source apparatus 34 includes a battery 50. The battery 50 is charged by the DC power supplied from the main power source apparatus 32. In the following, the battery 50 in the first auxiliary power source apparatus 34a may be referred to as a first battery 50a. Furthermore, the battery 50 in the second auxiliary power source apparatus 34b may be referred to as a second battery 50b. The battery 50 in the third auxiliary power source apparatus 34c may be referred to as a third battery 50c. The battery 50 in the fourth auxiliary power source apparatus 34d may be referred to as a fourth battery 50d. The first battery 50a and the second battery 50b correspond to first batteries of the present invention. The third battery 50c and the fourth battery 50d correspond to second batteries of the present invention.

The first battery 50a and the second battery 50b supply electric power to the VTOL electric motors 20V of the first drive system 28 and the cruise electric motors 24C of the first drive system 28. That is, the first battery 50a and the second battery 50b function as power storage apparatuses of the first drive system 28. In the following, the first battery 50a and the second battery 50b may each be referred to as a battery 50 of the first drive system 28. The third battery 50c and the fourth battery 50d supply electric power to the VTOL electric motors 20V of the second drive system 30 and the cruise electric motors 24C of the second drive system 30. That is, the third battery 50c and the fourth battery 50d function as power storage apparatuses of the second drive system 30. In the following, the third battery 50c and the fourth battery 50d may each be referred to as a battery 50 of the second drive system 30.

Each load module 36 includes two VTOL drive units 52 and one cruise drive unit 54.

Each VTOL drive unit 52 includes an inverter 56 and the VTOL electric motor 20V. The inverter 56 converts the DC power supplied by the main power source circuit 40 into three-phase AC power, and outputs this AC power to the VTOL electric motor 20V.

The cruise drive unit 54 includes an inverter 58 and the cruise electric motor 24C. The inverter 58 converts the DC power supplied by the main power source circuit 40 into three-phase AC power, and outputs this AC power to the cruise electric motor 24C.

The first load module 36a and the third load module 36c each include a converter 60. The converter 60 steps down the voltage of the DC power supplied from the main power source apparatus 32, and outputs this voltage to a device that operates using DC power. The device that operates using DC power is a cooling apparatus that cools the PCU 48, the inverter 56, the inverter 58, and the like, for example.

Each main power source circuit 40 includes one common bus 62, one contactor unit 64, two contactor units 66, one current sensor 68, and two current sensors 70.

The common bus 62 connects one main power source apparatus 32 and two load modules 36. Due to the common bus 62, the two load modules 36 are connected in parallel to the main power source apparatus 32.

The contactor unit 64 is provided between the main power source apparatus 32 and the common bus 62. The contactor unit 64 switches between a conduction state, in which current flows between the main power source apparatus 32 and the common bus 62, and an interruption state, in which the flow of current between the main power source apparatus 32 and the common bus 62 is interrupted. The contactor unit 64 includes a contactor 64a and a contactor 64b. The contactor 64a is provided to the positive wire of the main power source circuit 40. The contactor 64b is provided to the negative wire of the main power source circuit 40. The contactor unit 64 may include just one of the contactor 64a and the contactor 64b.

Each contactor unit 66 is provided between the corresponding load module 36 and the common bus 62. The contactor unit 66 switches between a conduction state, in which current flows between the corresponding load module 36 and the common bus 62, and an interruption state, in which the flow of current between the corresponding load module 36 and the common bus 62 is interrupted. The contactor unit 66 includes a contactor 66a and a contactor 66b. The contactor 66a is provided to the positive wire of the main power source circuit 40. The contactor 66b is provided to the negative wire of the main power source circuit 40. The contactor unit 66 may include just one of the contactor 66a and the contactor 66b. In a case where the contactor unit 64 includes only the contactor 64a, the contactor unit 66 preferably includes only the contactor 66b. In a case where the contactor unit 64 includes only the contactor 64b, the contactor unit 66 preferably includes only the contactor 66a.

The current sensor 68 is provided between the contactor unit 64 and the common bus 62. The current sensor 68 is provided to the positive wire of the main power source circuit 40. Each current sensor 70 is provided between the corresponding contactor unit 66 and the common bus 62. Each current sensor 70 is provided to the positive wire of the main power source circuit 40.

Each auxiliary power source circuit 42 is connected to both the main power source circuit 40 and the load module 36. The auxiliary power source circuit 42 supplies electric power from the auxiliary power source apparatus 34 to the load module 36. Furthermore, the auxiliary power source circuit 42 supplies electric power from the main power source circuit 40 to the auxiliary power source apparatus 34. The auxiliary power source circuit 42 includes a contactor unit 72 and a current sensor 74.

The contactor unit 72 is provided between the auxiliary power source apparatus 34 and the load module 36. The contactor unit 72 switches between a conduction state, in which current flows between the auxiliary power source apparatus 34 and the load module 36, and an interruption state, in which the flow of current between the auxiliary power source apparatus 34 and the load module 36 is interrupted. The contactor unit 72 includes a contactor 72a, a contactor 72b, and a precharge circuit 72c. The contactor 72a is provided to the positive wire of the auxiliary power source circuit 42. The contactor 72b is provided to the negative wire of the auxiliary power source circuit 42. The precharge circuit 72c is provided in parallel with the contactor 72b. The precharge circuit 72c includes a contactor 72d and a resistor 72e. The current sensor 74 is provided to the negative wire of the auxiliary power source circuit 42.

The contactor unit 72 may include just the contactor 72b and the precharge circuit 72c. The precharge circuit 72c may be provided in parallel with the contactor 72a. In such a case, the contactor unit 72 may include just the contactor 72a and the precharge circuit 72c.

A diode 76 is provided between the main power source circuit 40 and each auxiliary power source circuit 42. The anode of the diode 76 is connected to the main power source circuit 40, and the cathode of the diode 76 is connected to the auxiliary power source circuit 42. The supply of electric power from the main power source circuit 40 to the auxiliary power source circuit 42 is allowed by the diode 76. The supply of electric power from the auxiliary power source circuit 42 to the main power source circuit 40 is blocked by the diode 76. In a case where the main power source circuit 40 has shorted, electricity is prevented from flowing from the auxiliary power source apparatus 34 to the main power source circuit 40. As a result, even when the main power source circuit 40 has shorted, electric power can be supplied from the auxiliary power source apparatus 34 to the load module 36.

A transistor 78 is provided in parallel with the diode 76. When the transistor 78 is ON, the diode 76 is bypassed and electric power is supplied from the auxiliary power source apparatus 34 to the main power source circuit 40. Due to the electric power supplied from the auxiliary power source apparatus 34, the power generator 46 can operate to activate the gas turbine 44.

Among the VTOL rotors 18V arranged on the left side of the center line A of the fuselage 12 (FIG. 1), the VTOL rotors 18V driven by the VTOL electric motors 20V of the first drive system 28 are the two rotors 18V1 and 18V5 (FIG. 2). Among the VTOL rotors 18V arranged on the left side of the center line A of the fuselage 12 (FIG. 1), the VTOL rotors 18V driven by the VTOL electric motors 20V of the second drive system 30 are the two rotors 18V3 and 18V7 (FIG. 2). That is, among the VTOL rotors 18V arranged on the left side of the center line A of the fuselage 12, the number of VTOL rotors 18V driven by the VTOL electric motors 20V of the first drive system 28 and the number of VTOL rotors 18V driven by the VTOL electric motors 20V of the second drive system 30 are the same.

Among the VTOL rotors 18V arranged on the right side of the center line A of the fuselage 12 (FIG. 1), the VTOL rotors 18V driven by the VTOL electric motors 20V of the first drive system 28 are the two rotors 18V4 and 18V8 (FIG. 2). Among the VTOL rotors 18V arranged on the right side of the center line A of the fuselage 12 (FIG. 1), the VTOL rotors 18V driven by the VTOL electric motors 20V of the second drive system 30 are the two rotors 18V2 and 18V6 (FIG. 2). That is, among the VTOL rotors 18V arranged on the right side of the center line A of the fuselage 12, the number of VTOL rotors 18V driven by the VTOL electric motors 20V of the first drive system 28 and the number of VTOL rotors 18V driven by the VTOL electric motors 20V of the second drive system 30 are the same.

The rotor 22C1 arranged on the left side of the center line A of the fuselage 12 is driven by the cruise electric motor 24C of the first drive system 28 and also driven by the cruise electric motor 24C of the second drive system 30 (FIG. 2). That is, among the cruise rotors 22C arranged on the left side of the center line A of the fuselage 12, the number of cruise rotors 22C driven by the cruise electric motors 24C of the first drive system 28 and the number of cruise rotors 22C driven by the cruise electric motors 24C of the second drive system 30 are the same.

The rotor 22C2 arranged on the right side of the center line A of the fuselage 12 is driven by the cruise electric motor 24C of the first drive system 28 and also driven by the cruise electric motor 24C of the second drive system 30 (FIG. 2). That is, among the cruise rotors 22C arranged on the right side of the center line A of the fuselage 12, the number of cruise rotors 22C driven by the cruise electric motors 24C of the first drive system 28 and the number of cruise rotors 22C driven by the cruise electric motors 24C of the second drive system 30 are the same.

### [Configuration of Flight Controller]

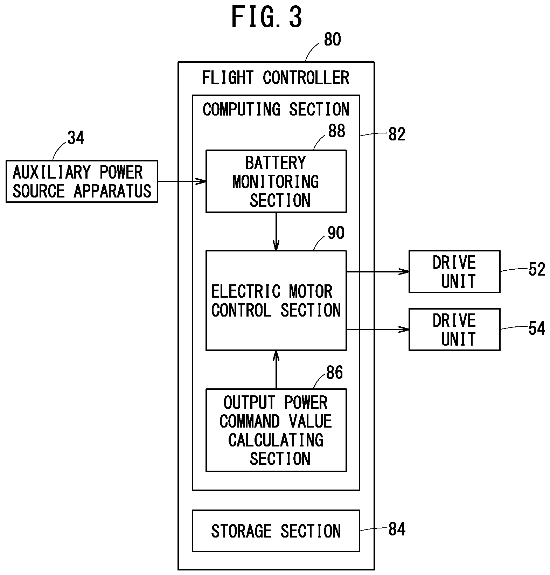

The power supply system 26 includes a flight controller 80. The flight controller 80 controls the thrust output from each VTOL rotor 18V and each cruise rotor 22C. FIG. 3 is a control block diagram of the flight controller 80.

The flight controller 80 includes a computing section 82 and a storage section 84. The computing section 82 is a processor such as a CPU (Central Processing Unit) or GPU (Graphics Processing Unit), for example. The computing section 82 includes an output power command value calculating section 86, a battery monitoring section 88, and an electric motor control section 90. The output power command value calculating section 86, the battery monitoring section 88, and the electric motor control section 90 are realized by the computing section 82 executing programs stored in the storage section 84. At least a portion of the output power command value calculating section 86, the battery monitoring section 88, and the electric motor control section 90 may be realized by an integrated circuit such as an ASIC (Application Specific Integrated Circuit) or an FPGA (Field-Programmable Gate Array). At least a portion of the output power command value calculating section 86, the battery monitoring section 88, and the electric motor control section 90 may be realized by an electronic circuit that includes a discrete device.

The storage section 84 is formed by a volatile memory (not shown in the drawings) and a nonvolatile memory (not shown in the drawings) that are computer-readable storage media. The volatile memory is a RAM (Random Access Memory) or the like, for example. The nonvolatile memory is a ROM (Read Only Memory), a flash memory, or the like, for example. Data and the like are stored in the volatile memory, for example. Programs, tables, maps, and the like are stored in the nonvolatile memory, for example. At least a portion of the storage section 84 may be included the processor, integrated circuit, or the like described above.

The output power command value calculating section 86 calculates an output power command value for each VTOL electric motor 20V, and an output power command value for each cruise electric motor 24C. The output power command values are determined according to a manipulation amount of a manipulation input section performed by the pilot. The manipulation input section is a control stick, a pedal, a lever, or the like, for example. The manipulation amount of the manipulation input section and the output power command value do not need to have a one-to-one relationship. The output power command value may vary with respect to the manipulation amount of the manipulation input section, according to the manipulation range of the manipulation input section, the manipulation speed of the manipulation input section, the attitude of the fuselage 12, and the like.

If there is no manipulation input to the manipulation input section by the pilot, the output power command value may be determined automatically to realize hovering, regardless of the manipulation amount of the manipulation input section. Furthermore, in a case where the aircraft 10 is controlled automatically, the output power command value may be determined automatically according to a preset flight route, regardless of the manipulation amount of the manipulation input section.

The battery monitoring section 88 monitors the SOC (State Of Charge) of the battery 50 of each auxiliary power source apparatus 34.

The electric motor control section 90 controls each VTOL electric motor 20V, and sets the output power of each VTOL electric motor 20V to the output power command value. The electric motor control section 90 controls each cruise electric motor 24C, and sets the output power of each cruise electric motor 24C to the output power command value. The electric motor control section 90 performs SOC equalization control, as described below.

### [SOC Equalization Control]

The following describes SOC equalization control performed by the electric motor control section 90.

As an example, in a case where the fuselage 12 experiences a disturbance such as a crosswind, the output power of some of the VTOL electric motors 20V is increased to be greater than the output power of other VTOL electric motors 20V, in order to fix the attitude of the fuselage 12. In this case, a difference occurs between the SOCs of the respective batteries 50. The SOC equalization control is control performed to equalize the SOCs of the batteries 50 when a difference occurs between the SOCs of respective batteries 50.

When there is a difference in the SOC between the first battery 50a and the second battery 50b, which are power storage apparatuses of the first drive system 28, the SOCs of these two batteries 50 become approximately equal even if the SOC equalization control is not performed. As shown in FIG. 2, the first battery 50a and the second battery 50b are connected in parallel to the first main power source apparatus 32a. The battery 50 with a low SOC has a lower voltage than the battery 50 with a high SOC.

Therefore, when a difference occurs between the SOC of the first battery 50a and the SOC of the second battery 50b, the current flowing from the first power generator 46a to the battery 50 with a low SOC is greater than the current flowing from the first power generator 46a to the battery 50 with a high SOC during charging of the batteries 50. As a result, the charged electric power amount of the battery 50 with a low SOC becomes greater than the charged electric power amount of the battery 50 with a high SOC, and the SOC of the first battery 50a and SOC of the second battery 50b become approximately equal.

Furthermore, when a difference occurs between the SOC of the first battery 50a and the SOC of the second battery 50b, the current flowing from the first power generator 46a to the load module 36 connected to the battery 50 with a low SOC is greater than the current flowing from the first power generator 46a to the load module 36 connected to the battery 50 with a high SOC during discharging of the batteries 50. As a result, the discharged electric power amount of the battery 50 with a low SOC becomes less than the discharged electric power amount of the battery 50 with a high SOC, and the SOC of the first battery 50a and SOC of the second battery 50b become approximately equal.

The third battery 50c and the fourth battery 50d, which are power storage apparatuses of the second drive system 30, are connected in parallel to the second main power source apparatus 32b. Therefore, even when a difference occurs between the SOC of the third battery 50c and the SOC of the fourth battery 50d, the SOC of the third battery 50c and the SOC of the fourth battery 50d become approximately equal.

On the other hand, the batteries 50 of the first drive system 28 and the batteries 50 of the second drive system 30 are connected to different main power source apparatuses 32. Therefore, when a difference occurs between the SOC of the batteries 50 of the first drive system 28 and the SOC of the batteries 50 of the second drive system 30, it is necessary to perform the SOC equalization control to make the SOC of the batteries 50 of the first drive system 28 and the SOC of the batteries 50 of the second drive system 30 equal.

With the SOC equalization control, consumed electric power of each cruise electric motor 24C is adjusted to make the electric power supplied to the battery 50 with a low SOC greater than the electric power supplied to the battery 50 with a high SOC. The consumed electric power of each cruise electric motor 24C is adjusted by controlling the output power of each cruise electric motor 24C.

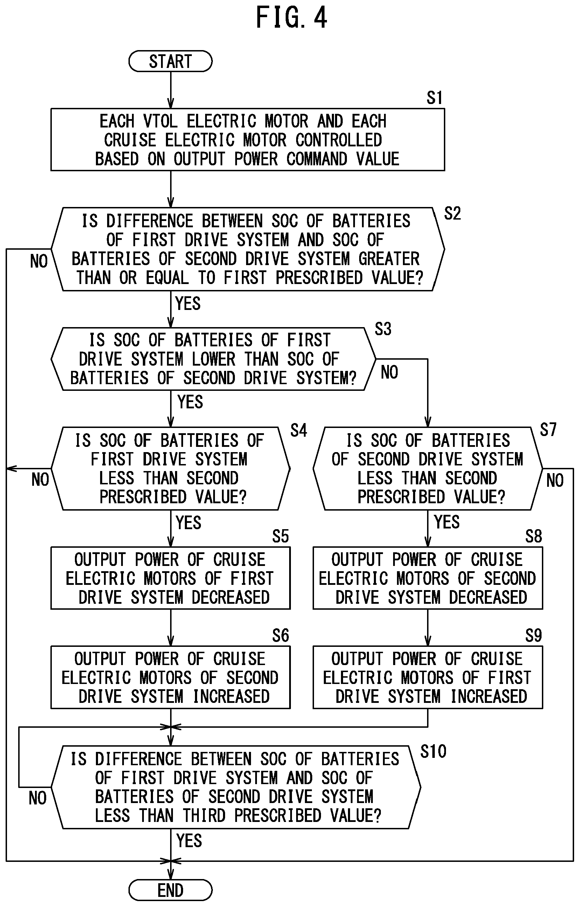

FIG. 4 is a flow chart showing a process of output power control. The SOC equalization control is performed as a portion of the output power control. The output power control is performed by the electric motor control section 90. This output power control is performed repeatedly at prescribed intervals, while the aircraft 10 is operating.

At step S1, the electric motor control section 90 controls each VTOL electric motor 20V and each cruise electric motor 24C, based on the output power command values. After this, the process moves to step S2. Due to the processing of step S1, the output power of each VTOL electric motor 20V and each cruise electric motor 24C becomes approximately equal to the output power command value.

At step S2, the electric motor control section 90 determines whether the difference between the SOC of the batteries 50 of the first drive system 28 and the SOC of the batteries 50 of the second drive system 30 is greater than or equal to a first prescribed value. If the difference between the SOC of the batteries 50 of the first drive system 28 and the SOC of the batteries 50 of the second drive system 30 is greater than or equal to the first prescribed value, the process moves to step S3. If the difference between the SOC of the batteries 50 of the first drive system 28 and the SOC of the batteries 50 of the second drive system 30 is less than the first prescribed value, the output power control ends. The first prescribed value is set to a value making it possible to determine that there is a certain degree of difference between the SOC of the batteries 50 of the first drive system 28 and the SOC of the batteries 50 of the second drive system 30.

At step S3, the electric motor control section 90 determines whether the SOC of the batteries 50 of the first drive system 28 is lower than the SOC of the batteries 50 of the second drive system 30. If the SOC of the batteries 50 of the first drive system 28 is lower than the SOC of the batteries 50 of the second drive system 30, the process moves to step S4. If the SOC of the batteries 50 of the first drive system 28 is higher than the SOC of the batteries 50 of the second drive system 30, the process moves to step S7.

At step S4, the electric motor control section 90 determines whether the SOC of the batteries 50 of the first drive system 28 is less than a second prescribed value. If the SOC of the batteries 50 of the first drive system 28 is less than the second prescribed value, the process moves to step S5. If the SOC of the batteries 50 of the first drive system 28 is greater than or equal to the second prescribed value, the output power control ends. The SOC of the batteries 50 of the first drive system 28 being less than the second prescribed value indicates that the SOC of the batteries 50 of the first drive system 28 is lower than the second prescribed value. The SOC of the batteries 50 of the first drive system 28 being greater than or equal to the second prescribed value indicates that the SOC of the batteries 50 of the first drive system 28 is equal to the second prescribed value or that the SOC of the batteries 50 of the first drive system 28 is higher than the second prescribed value. The second prescribed value is set to be a relatively low SOC value. In the subsequent steps S5 and S6, the SOC equalization control is performed.

At step S5, the electric motor control section 90 decreases the output power of the cruise electric motors 24C of the first drive system 28, to be smaller than the output power command value. After this, the process moves to step S6. Due to the processing of step S5, the consumed electric power of the cruise electric motors 24C of the first drive system 28 is decreased. Furthermore, if other conditions are constant, the thrust generated due to the cruise electric motors 24C of the first drive system 28 driving the cruise rotors 22C decreases.

At step S6, the electric motor control section 90 increases the output power of the cruise electric motors 24C of the second drive system 30, to be greater than the output power command value. After this, the process moves to step S10. Due to the processing of step S6, the consumed electric power of the cruise electric motors 24C of the second drive system 30 is increased. Furthermore, if other conditions are constant, the thrust generated due to the cruise electric motors 24C of the second drive system 30 driving the cruise rotors 22C increases.

At step S6, the thrust generated due to the cruise electric motors 24C of the second drive system 30 driving the cruise rotors 22C is increased by an amount corresponding to the amount of the decrease of the thrust generated due to the cruise electric motors 24C of the first drive system 28 driving the cruise rotors 22C in step S5. As a result, the sum of the thrust generated due to the cruise electric motors 24C of the first drive system 28 driving the cruise rotors 22C and the thrust generated due to the cruise electric motors 24C of the second drive system 30 driving the cruise rotors 22C is kept the same before and after the SOC equalization control.

At step S7, the electric motor control section 90 determines whether the SOC of the batteries 50 of the second drive system 30 is less than the second prescribed value. If the SOC of the batteries 50 of the second drive system 30 is less than the second prescribed value, the process moves to step S8. If the SOC of the batteries 50 of the second drive system 30 is greater than or equal to the second prescribed value, the output power control ends. The SOC of the batteries 50 of the second drive system 30 being less than the second prescribed value indicates that the SOC of the batteries 50 of the second drive system 30 is lower than the second prescribed value. The SOC of the batteries 50 of the second drive system 30 being greater than or equal to the second prescribed value indicates that the SOC of the batteries 50 of the second drive system 30 is equal to the second prescribed value or that the SOC of the batteries 50 of the second drive system 30 is higher than the second prescribed value. In the subsequent steps S8 and S9, the SOC equalization control is performed.

At step S8, the electric motor control section 90 decreases the output power of the cruise electric motors 24C of the second drive system 30, to be smaller than the output power command value. After this, the process moves to step S9. Due to the processing of step S8, the consumed electric power of the cruise electric motors 24C of the second drive system 30 is decreased. Furthermore, if other conditions are constant, the thrust generated due to the cruise electric motors 24C of the second drive system 30 driving the cruise rotors 22C decreases.

At step S9, the electric motor control section 90 increases the output power of the cruise electric motors 24C of the first drive system 28, to be greater than the output power command value. After this, the process moves to step S10. Due to the processing of step S9, the consumed electric power of the cruise electric motors 24C of the first drive system 28 is increased. Furthermore, if other conditions are constant, the thrust generated due to the cruise electric motors 24C of the first drive system 28 driving the cruise rotors 22C increases.

At step S9, the thrust generated due to the cruise electric motors 24C of the first drive system 28 driving the cruise rotors 22C is increased by an amount corresponding to the amount of the decrease of the thrust generated due to the cruise electric motors 24C of the second drive system 30 driving the cruise rotors 22C in step S8. As a result, the sum of the thrust generated due to the cruise electric motors 24C of the first drive system 28 driving the cruise rotors 22C and the thrust generated due to the cruise electric motors 24C of the second drive system 30 driving the cruise rotors 22C is kept the same before and after the SOC equalization control.

At step S10, the electric motor control section 90 determines whether the difference between the SOC of the batteries 50 of the first drive system 28 and the SOC of the batteries 50 of the second drive system 30 is less than a third prescribed value. If the difference between the SOC of the batteries 50 of the first drive system 28 and the SOC of the batteries 50 of the second drive system 30 is less than the third prescribed value, the output power control ends. If the difference between the SOC of the batteries 50 of the first drive system 28 and the SOC of the batteries 50 of the second drive system 30 is greater than or equal to the third prescribed value, the process of step S10 is repeated.

The third prescribed value is a value for determining that the SOC of the batteries 50 of the first drive system 28 and the SOC of the batteries 50 of the second drive system 30 have become approximately equal. The third prescribed value is set to be smaller than the first prescribed value.

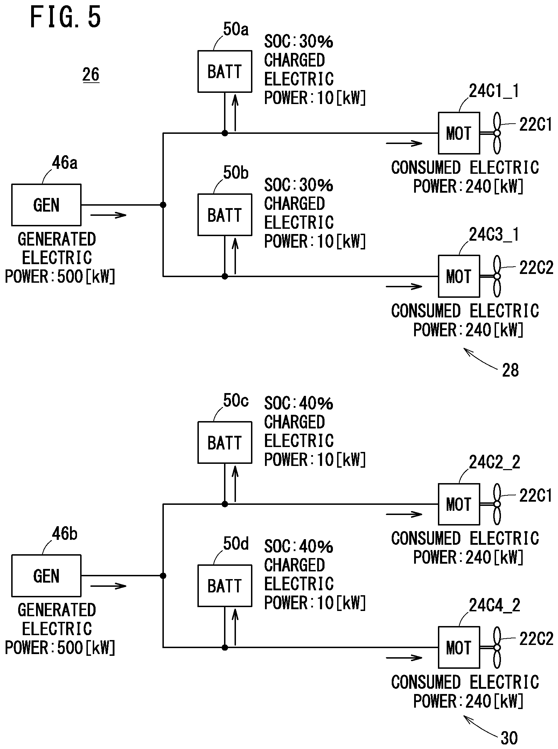

FIG. 5 is a schematic view of the power supply system 26. FIG. 5 schematically shows only the connection relationship among the first power generator 46a, the second power generator 46b, the batteries 50 of the first drive system 28 (first battery 50a and second battery 50b), the batteries 50 of the second drive system 30 (third battery 50c and fourth battery 50d), the cruise electric motors 24C of the first drive system 28 (electric motor 24C1_1 and electric motor 24C3_1), and the cruise electric motors 24C of the second drive system 30 (electric motor 24C2_2 and electric motor 24C4_2). The generated electric power, charged electric power, and consumed electric power shown in FIG. 5 are examples in a case where the electric motor control section 90 controls each cruise electric motor 24C to make the output power thereof equal to the output power command value.

The example shown in FIG. 5 is an example in which the total consumed electric power of the cruise electric motors 24C of the first drive system 28 is less than the generated electric power generated by the first power generator 46a, and the batteries 50 of the first drive system 28 are charged with the excess electric power. Furthermore, the example shown in FIG. 5 is an example in which the total consumed electric power of the cruise electric motors 24C of the second drive system 30 is less than the generated electric power generated by the second power generator 46b, and the batteries 50 of the second drive system 30 are charged with the excess electric power.

In the example shown in FIG. 5, the charged electric power of the batteries 50 of the first drive system 28 and the charged electric power of the batteries 50 of the second drive system 30 are equal. Therefore, in the example shown in FIG. 5, a state is maintained in which there is a difference between the SOC of the batteries 50 of the first drive system 28 and the SOC of the batteries 50 of the second drive system 30.

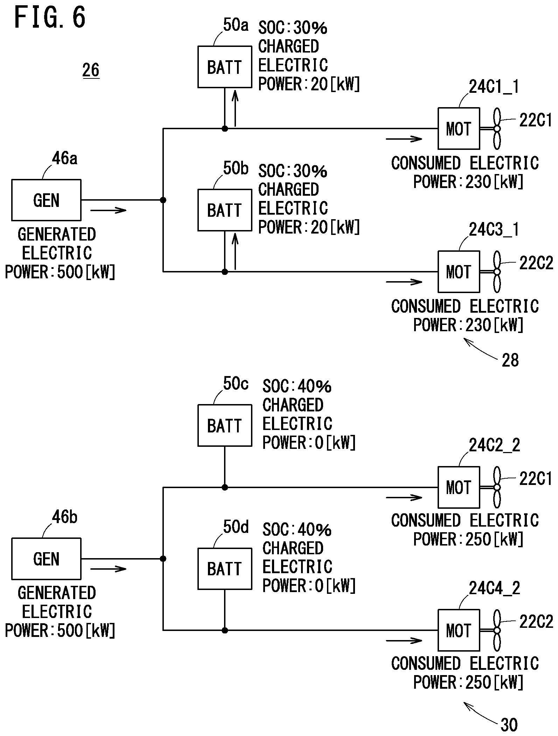

FIG. 6 is a schematic view of the power supply system 26. The generated electric power, charged electric power, and consumed electric power shown in FIG. 6 are examples in a case where each cruise electric motor 24C is controlled according to the SOC equalization control.

The electric motor control section 90 decreases the output power of the cruise electric motors 24C of the first drive system 28, to be less than the output power command value. Furthermore, the electric motor control section 90 increases the output power of the cruise electric motors 24C of the second drive system 30, to be greater than the output power command value. Due to this, the consumed electric power of the cruise electric motors 24C of the first drive system 28 becomes less than the consumed electric power of the cruise electric motors 24C of the second drive system 30. As a result, the charged electric power of the batteries 50 of the first drive system 28 becomes greater than the charged electric power of the batteries 50 of the second drive system 30. Therefore, the difference between the SOC of the batteries 50 of the first drive system 28 and the SOC of the batteries 50 of the second drive system 30 becomes smaller.

If other conditions are constant, the thrust generated due to the cruise electric motors 24C of the first drive system 28 driving the cruise rotors 22C decreases due to the output power of the cruise electric motors 24C of the first drive system 28 being decreased. In contrast to this, the thrust generated due to the cruise electric motors 24C of the second drive system 30 driving the cruise rotors 22C increases due to the output power of the cruise electric motors 24C of the second drive system 30 being increased. Therefore, the sum of the thrust generated due to the cruise electric motors 24C of the first drive system 28 driving the cruise rotors 22C and the thrust generated due to the cruise electric motors 24C of the second drive system 30 driving the cruise rotors 22C is kept the same before and after the SOC equalization control.

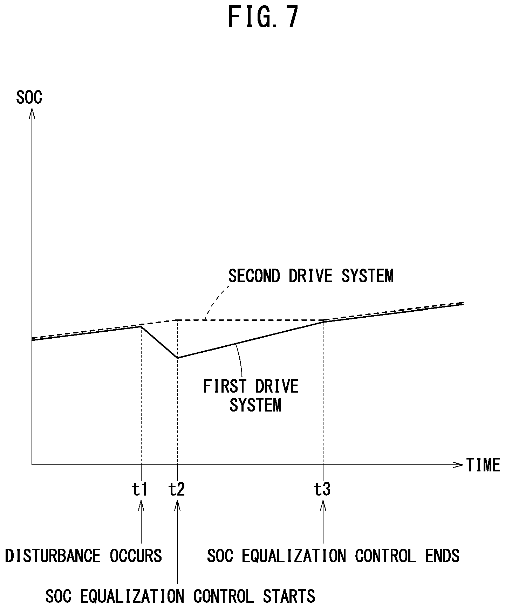

FIG. 7 is a graph showing the change over time of the SOC of each battery 50. The solid line in the graph of FIG. 7 indicates the change over time of the SOC of the batteries 50 of the first drive system 28. The dotted line in the graph of FIG. 7 indicates the change over time of the SOC of the batteries 50 of the second drive system 30.

A disturbance occurs at the timing t1, and the difference between the SOC of the batteries 50 of the first drive system 28 and the SOC of the batteries 50 of the second drive system 30 becomes greater than or equal to the first prescribed value at the timing t2. The SOC of the batteries 50 of the first drive system 28 at the timing t2 is less than the second prescribed value.

Therefore, at the timing t2, the SOC equalization control is started. The difference between the SOC of the batteries 50 of the first drive system 28 and the SOC of the batteries 50 of the second drive system 30 becomes smaller due to the SOC equalization control.

When the SOC of the batteries 50 of the first drive system 28 and the SOC of the batteries 50 of the second drive system 30 become approximately equal at the timing t3, the SOC equalization control ends.

### [Operational Effect]

As described above, there are cases where, when the fuselage 12 experiences a disturbance such as a crosswind, the output power of some of the VTOL electric motors 20V is increased to be greater than the output power of other VTOL electric motors 20V, in order to fix the attitude of the fuselage 12. In this case, a difference can occur between the SOCs of the respective batteries 50.

When a difference occurs between the SOCs of respective batteries 50, there is a possibility that there is insufficient electric power for some load modules 36, despite sufficient electric power being able to be supplied to other load modules 36.

With the flight controller 80 of the present embodiment, the electric motor control section 90 performs the SOC equalization control in the following case. The following case is a case where the difference between the SOC of the batteries 50 of the first drive system 28 and the SOC of the batteries 50 of the second drive system 30 is greater than or equal to the first prescribed value, and the SOC of the batteries 50 of the first drive system 28 is less than the second prescribed value.

Furthermore, if the SOC of the batteries 50 of the first drive system 28 is lower than the SOC of the batteries 50 of the second drive system 30, the electric motor control section 90 decreases the output power of the cruise electric motors 24C of the first drive system 28 to be less than the output power command value. Due to this, the charged electric power of the batteries 50 of the first drive system 28 can be increased than before the output power of the cruise electric motors 24C of the first drive system 28 is decreased. As a result, the SOC of the batteries 50 of the first drive system 28 and the SOC of the batteries 50 of the second drive system 30 can be made approximately equal.

In the manner described above, when the output power of the cruise electric motors 24C of the first drive system 28 is decreased, the thrust generated due to the cruise electric motors 24C of the first drive system 28 driving the cruise rotors 22C is decreased.

Therefore, with the flight controller 80 of the present embodiment, the electric motor control section 90 increases the output power of the cruise electric motors 24C of the second drive system 30 to be greater than the output power command value. Due to this, the thrust generated due to the cruise electric motors 24C of the second drive system 30 driving the cruise rotors 22C is increased by an amount corresponding to the amount of the decrease of the thrust generated due to the cruise electric motors 24C of the first drive system 28 driving the cruise rotors 22C. As a result, the sum of the thrust generated due to the cruise electric motors 24C of the first drive system 28 driving the cruise rotors 22C and the thrust generated due to the cruise electric motors 24C of the second drive system 30 driving the cruise rotors 22C can be kept the same before and after the SOC equalization control.

In the aircraft 10 of the present embodiment, among the cruise rotors 22C arranged on the left side of the center line A of the fuselage 12, the number of cruise rotors 22C driven by the cruise electric motors 24C of the first drive system 28 and the number of cruise rotors 22C driven by the cruise electric motors 24C of the second drive system 30 are the same.

Due to this, when the output power of the cruise electric motors 24C of the first drive system 28 is decreased and the output power of the cruise electric motors 24C of the second drive system 30 is increased, the thrust of the cruise rotor 22C positioned on the left side of the fuselage 12 and the thrust of the cruise rotor 22C positioned on the right side of the fuselage 12 can be made approximately equal. Due to this, the attitude of the fuselage 12 can be stabilized.

### [Second Embodiment]

With the flight controller 80 of the first embodiment, in the SOC equalization control, the electric motor control section 90 controls the output power of each cruise electric motor 24C to adjust the consumed electric power of each cruise electric motor 24C. In contrast to this, with the flight controller 80 of the present embodiment, in the SOC equalization control, the electric motor control section 90 controls the output power of each VTOL electric motor 20V to adjust the consumed electric power of each VTOL electric motor 20V. The configuration of the aircraft 10, the configuration of the power supply system 26, and the configuration of the flight controller 80 in the present embodiment are the same as those in the first embodiment.

### [SOC Equalization Control]

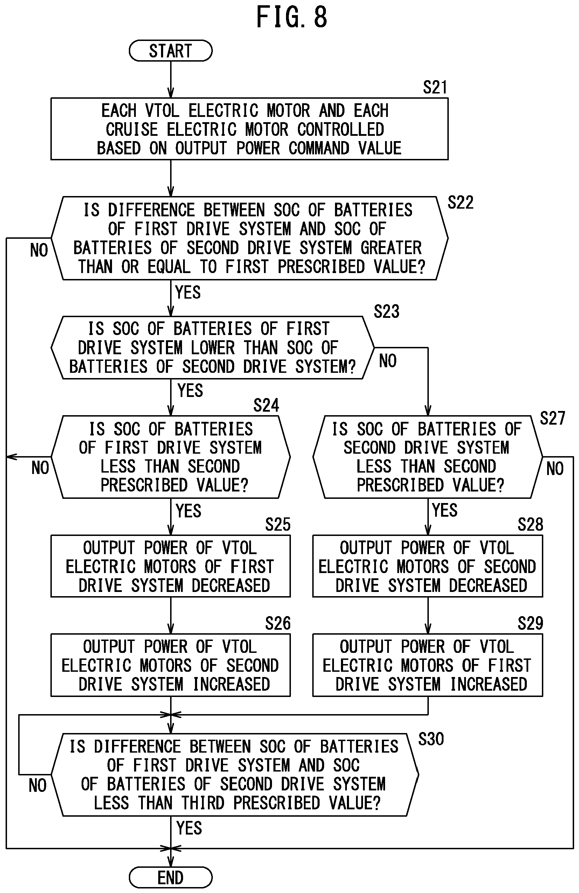

FIG. 8 is a flow chart showing a process of output power control. The output power control is performed by the electric motor control section 90. This output power control is performed repeatedly at prescribed intervals, while the aircraft 10 is operating.

At step S21, the electric motor control section 90 controls each VTOL electric motor 20V and each cruise electric motor 24C, based on the output power command value. After this, the process moves to step S22.

At step S22, the electric motor control section 90 determines whether the difference between the SOC of the batteries 50 of the first drive system 28 and the SOC of the batteries 50 of the second drive system 30 is greater than or equal to the first prescribed value. If the difference between the SOC of the batteries 50 of the first drive system 28 and the SOC of the batteries 50 of the second drive system 30 is greater than or equal to the first prescribed value, the process moves to step S23. If the difference between the SOC of the batteries 50 of the first drive system 28 and the SOC of the batteries 50 of the second drive system 30 is less than the first prescribed value, the output power control ends.

At step S23, the electric motor control section 90 determines whether the SOC of the batteries 50 of the first drive system 28 is lower than the SOC of the batteries 50 of the second drive system 30. If the SOC of the batteries 50 of the first drive system 28 is lower than the SOC of the batteries 50 of the second drive system 30, the process moves to step S24. If the SOC of the batteries 50 of the first drive system 28 is higher than the SOC of the batteries 50 of the second drive system 30, the process moves to step S27.

At step S24, the electric motor control section 90 determines whether the SOC of the batteries 50 of the first drive system 28 is less than the second prescribed value. If the SOC of the batteries 50 of the first drive system 28 is less than the second prescribed value, the process moves to step S25. If the SOC of the batteries 50 of the first drive system 28 is greater than or equal to the second prescribed value, the output power control ends. The SOC of the batteries 50 of the first drive system 28 being less than the second prescribed value indicates that the SOC of the batteries 50 of the first drive system 28 is lower than the second prescribed value. The SOC of the batteries 50 of the first drive system 28 being greater than or equal to the second prescribed value indicates that the SOC of the batteries 50 of the first drive system 28 is equal to the second prescribed value or that the SOC of the batteries 50 of the first drive system 28 is higher than the second prescribed value. In the subsequent steps S25 and S26, the SOC equalization control is performed.

At step S25, the electric motor control section 90 decreases the output power of the VTOL electric motors 20V of the first drive system 28, to be smaller than the output power command value. After this, the process moves to step S26. Due to the processing of step S25, the consumed electric power of the VTOL electric motors 20V of the first drive system 28 is decreased. Furthermore, if other conditions are constant, the thrust generated due to the VTOL electric motors 20V of the first drive system 28 driving the VTOL rotors 18V decreases.

At step S26, the electric motor control section 90 increases the output power of the VTOL electric motors 20V of the second drive system 30, to be greater than the output power command value. After this, the process moves to step S30. Due to the processing of step S26, the consumed electric power of the VTOL electric motors 20V of the second drive system 30 is increased. Furthermore, if other conditions are constant, the thrust generated due to the VTOL electric motors 20V of the second drive system 30 driving the VTOL rotors 18V increases.

At step S26, the thrust generated due to the VTOL electric motors 20V of the second drive system 30 driving the VTOL rotors 18V is increased by an amount corresponding to the amount of the decrease of the thrust generated due to the VTOL electric motors 20V of the first drive system 28 driving the VTOL rotors 18V in step S25. As a result, the sum of the thrust generated due to the VTOL electric motors 20V of the first drive system 28 driving the VTOL rotors 18V and the thrust generated due to the VTOL electric motors 20V of the second drive system 30 driving the VTOL rotors 18V is kept the same before and after the SOC equalization control.

At step S27, the electric motor control section 90 determines whether the SOC of the batteries 50 of the second drive system 30 is less than the second prescribed value. If the SOC of the batteries 50 of the second drive system 30 is less than the second prescribed value, the process moves to step S28. If the SOC of the batteries 50 of the second drive system 30 is greater than or equal to the second prescribed value, the output power control ends. The SOC of the batteries 50 of the second drive system 30 being less than the second prescribed value indicates that the SOC of the batteries 50 of the second drive system 30 is lower than the second prescribed value. The SOC of the batteries 50 of the second drive system 30 being greater than or equal to the second prescribed value indicates that the SOC of the batteries 50 of the second drive system 30 is equal to the second prescribed value or that the SOC of the batteries 50 of the second drive system 30 is higher than the second prescribed value. In the subsequent steps S28 and S29, the SOC equalization control is performed.

At step S28, the electric motor control section 90 decreases the output power of the VTOL electric motors 20V of the second drive system 30, to be smaller than the output power command value. After this, the process moves to step S29. Due to the processing of step S28, the consumed electric power of the VTOL electric motors 20V of the second drive system 30 is decreased. Furthermore, if other conditions are constant, the thrust generated due to the VTOL electric motors 20V of the second drive system 30 driving the VTOL rotors 18V decreases.

At step S29, the electric motor control section 90 increases the output power of the VTOL electric motors 20V of the first drive system 28, to be greater than the output power command value. After this, the process moves to step S30. Due to the processing of step S29, the consumed electric power of the VTOL electric motors 20V of the first drive system 28 is increased. Furthermore, if other conditions are constant, the thrust generated due to the VTOL electric motors 20V of the first drive system 28 driving the VTOL rotors 18V increases.

At step S29, the thrust generated due to the VTOL electric motors 20V of the first drive system 28 driving the VTOL rotors 18V is increased by an amount corresponding to the amount of the decrease of the thrust generated due to the VTOL electric motors 20V of the second drive system 30 driving the VTOL rotors 18V in step S28. As a result, the sum of the thrust generated due to the VTOL electric motors 20V of the first drive system 28 driving the VTOL rotors 18V and the thrust generated due to the VTOL electric motors 20V of the second drive system 30 driving the VTOL rotors 18V is kept the same before and after the SOC equalization control.

At step S30, the electric motor control section 90 determines whether the difference between the SOC of the batteries 50 of the first drive system 28 and the SOC of the batteries 50 of the second drive system 30 is less than the third prescribed value. If the difference between the SOC of the batteries 50 of the first drive system 28 and the SOC of the batteries 50 of the second drive system 30 is less than the third prescribed value, the output power control ends. If the difference between the SOC of the batteries 50 of the first drive system 28 and the SOC of the batteries 50 of the second drive system 30 is greater than or equal to the third prescribed value, the process of step S30 is repeated.

### (Case of Battery Discharging)

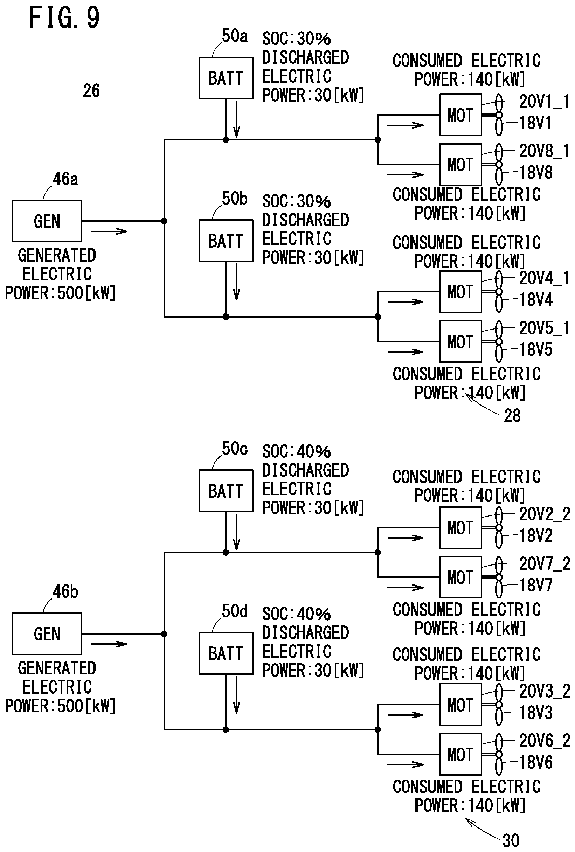

FIG. 9 is a schematic view of the power supply system 26. FIG. 9 schematically shows only the connection relationship among the first power generator 46a, the second power generator 46b, the batteries 50 of the first drive system 28 (first battery 50a and second battery 50b), the batteries 50 of the second drive system 30 (third battery 50c and fourth battery 50d), the VTOL electric motors 20V of the first drive system 28 (electric motor 20V1_1, electric motor 20V4_1, electric motor 20V5_1, and electric motor 20V8_1), and the VTOL electric motors 20V of the second drive system 30 (electric motor 20V2_2, electric motor 20V3_2, electric motor 20V6_2, and electric motor 20V7_2). The generated electric power, discharged electric power, and consumed electric power shown in FIG. 9 are examples in a case where the electric motor control section 90 controls each VTOL electric motor 20V to make the output power thereof equal to the output power command value.

The example shown in FIG. 9 is an example in which the total consumed electric power of the VTOL electric motors 20V of the first drive system 28 is greater than the generated electric power generated by the first power generator 46a, and the batteries 50 of the first drive system 28 are discharged. Furthermore, the example shown in FIG. 9 is an example in which the total consumed electric power of the VTOL electric motors 20V of the second drive system 30 is greater than the generated electric power generated by the second power generator 46b, and the batteries 50 of the second drive system 30 are discharged.

In the example shown in FIG. 9, the discharged electric power of the batteries 50 of the first drive system 28 and the discharged electric power of the batteries 50 of the second drive system 30 are equal. Therefore, in the example shown in FIG. 9, a state is maintained in which there is a difference between the SOC of the batteries 50 of the first drive system 28 and the SOC of the batteries 50 of the second drive system 30.

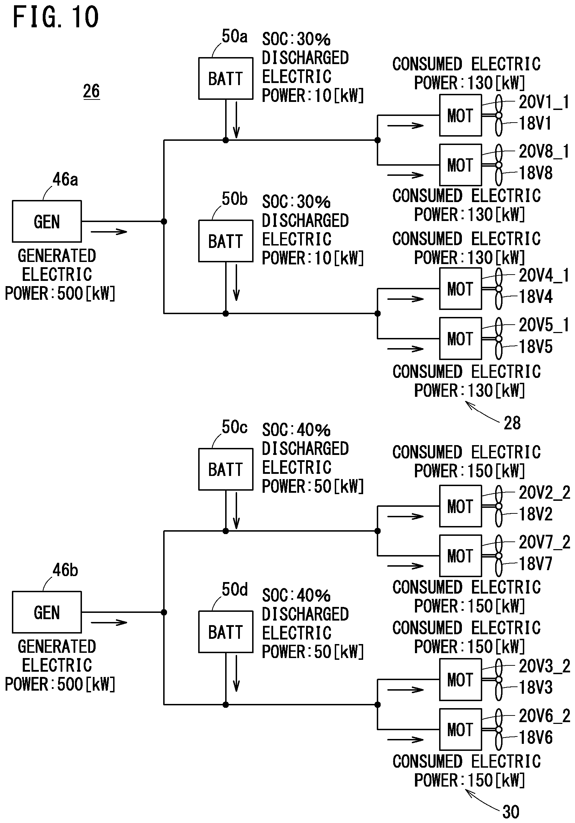

FIG. 10 is a schematic view of the power supply system 26. The generated electric power, discharged electric power, and consumed electric power shown in FIG. 10 are examples in a case where each VTOL electric motor 20V is controlled according to the SOC equalization control.

The electric motor control section 90 decreases the output power of the VTOL electric motors 20V of the first drive system 28, to be less than the output power command value. Furthermore, the electric motor control section 90 increases the output power of the VTOL electric motors 20V of the second drive system 30, to be greater than the output power command value. Due to this, the consumed electric power of the VTOL electric motors 20V of the first drive system 28 becomes less than the consumed electric power of the VTOL electric motors 20V of the second drive system 30. As a result, the discharged electric power of the batteries 50 of the first drive system 28 becomes less than the discharged electric power of the batteries 50 of the second drive system 30. Therefore, the difference between the SOC of the batteries 50 of the first drive system 28 and the SOC of the batteries 50 of the second drive system 30 becomes smaller.

If other conditions are constant, the thrust generated due to the VTOL electric motors 20V of the first drive system 28 driving the VTOL rotors 18V decreases due to the output power of the VTOL electric motors 20V of the first drive system 28 being decreased. In contrast to this, the thrust generated due to the VTOL electric motors 20V of the second drive system 30 driving the VTOL rotors 18V increases due to the output power of the VTOL electric motors 20V of the second drive system 30 being increased. As a result, the sum of the thrust generated due to the VTOL electric motors 20V of the first drive system 28 driving the VTOL rotors 18V and the thrust generated due to the VTOL electric motors 20V of the second drive system 30 driving the VTOL rotors 18V is kept the same before and after the SOC equalization control.

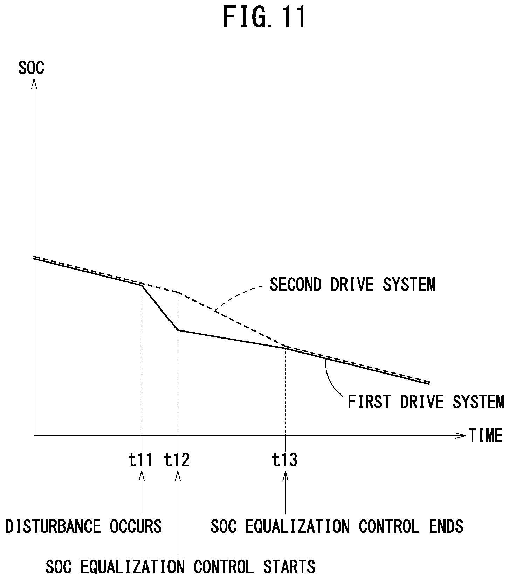

FIG. 11 is a graph showing the change over time of the SOC of each battery 50. The solid line in the graph of FIG. 11 indicates the change over time of the SOC of the batteries 50 of the first drive system 28. The dotted line in the graph of FIG. 11 indicates the change over time of the SOC of the batteries 50 of the second drive system 30.

A disturbance occurs at the timing t11, and the difference between the SOC of the batteries 50 of the first drive system 28 and the SOC of the batteries 50 of the second drive system 30 becomes greater than or equal to the first prescribed value at the timing t12. The SOC of the batteries 50 of the first drive system 28 at the timing t12 is less than the second prescribed value.

Therefore, at the timing t12, the SOC equalization control is started. The difference between the SOC of the batteries 50 of the first drive system 28 and the SOC of the batteries 50 of the second drive system 30 becomes smaller due to the SOC equalization control.

When the SOC of the batteries 50 of the first drive system 28 and the SOC of the batteries 50 of the second drive system 30 become approximately equal at the timing t13, the SOC equalization control ends.

### (Case of Battery Charging)

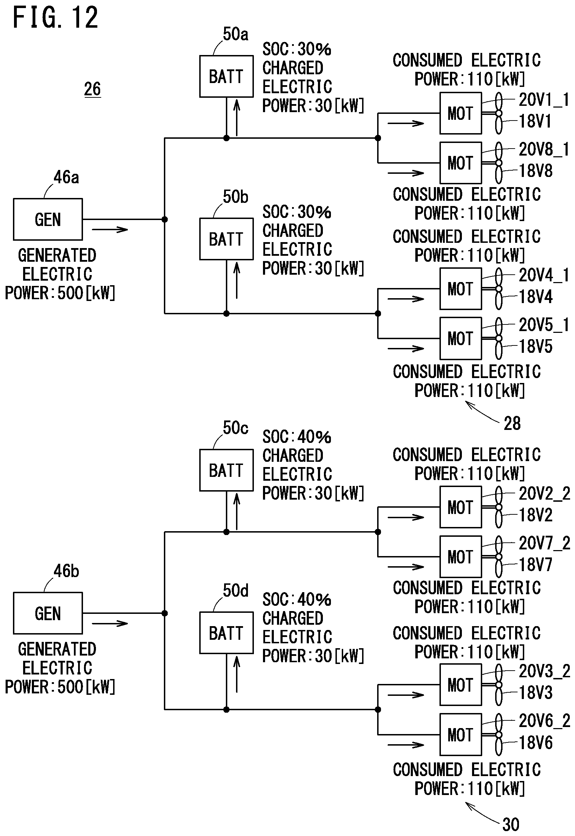

FIG. 12 is a schematic view of the power supply system 26. FIG. 12 schematically shows only the connection relationship among the first power generator 46a, the second power generator 46b, the batteries 50 of the first drive system 28 (first battery 50a and second battery 50b), the batteries 50 of the second drive system 30 (third battery 50c and fourth battery 50d), the VTOL electric motors 20V of the first drive system 28 (electric motor 20V1_1, electric motor 20V4_1, electric motor 20V5_1, and electric motor 20V8_1), and the VTOL electric motors 20V of the second drive system 30 (electric motor 20V2_2, electric motor 20V3_2, electric motor 20V6_2, and electric motor 20V7_2). The generated electric power, charged electric power, and consumed electric power shown in FIG. 12 are examples in a case where each VTOL electric motor 20V is controlled based on the output power command value.

The example shown in FIG. 12 is an example in which the total consumed electric power of the VTOL electric motors 20V of the first drive system 28 is less than the generated electric power generated by the first power generator 46a, and the batteries 50 of the first drive system 28 are charged with the excess electric power. Furthermore, the example shown in FIG. 12 is an example in which the total consumed electric power of the VTOL electric motors 20V of the second drive system 30 is less than the generated electric power generated by the second power generator 46b, and the batteries 50 of the second drive system 30 are charged with the excess electric power.

In the example shown in FIG. 12, the charged electric power of the batteries 50 of the first drive system 28 and the charged electric power of the batteries 50 of the second drive system 30 are equal. Therefore, in the example shown in FIG. 12, a state is maintained in which there is a difference between the SOC of the batteries 50 of the first drive system 28 and the SOC of the batteries 50 of the second drive system 30.

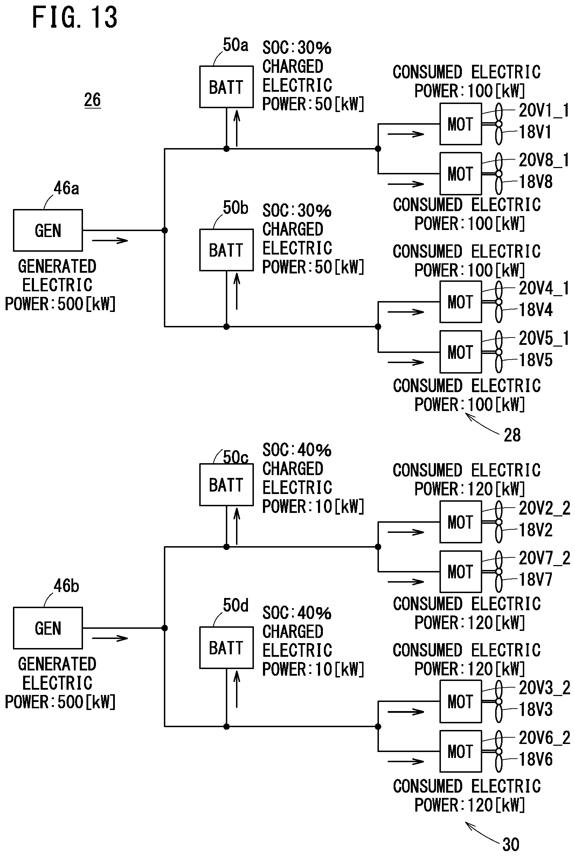

FIG. 13 is a schematic view of the power supply system 26. The generated electric power, charged electric power, and consumed electric power shown in FIG. 13 are examples in a case where each VTOL electric motor 20V is controlled according to the SOC equalization control.

The electric motor control section 90 decreases the output power of the VTOL electric motors 20V of the first drive system 28, to be less than the output power command value. Furthermore, the electric motor control section 90 increases the output power of the VTOL electric motors 20V of the second drive system 30, to be greater than the output power command value. Due to this, the consumed electric power of the VTOL electric motors 20V of the first drive system 28 becomes less than the consumed electric power of the VTOL electric motors 20V of the second drive system 30. As a result, the charged electric power of the batteries 50 of the first drive system 28 becomes greater than the charged electric power of the batteries 50 of the second drive system 30. Therefore, the difference between the SOC of the batteries 50 of the first drive system 28 and the SOC of the batteries 50 of the second drive system 30 becomes smaller.

If other conditions are constant, the thrust generated due to the VTOL electric motors 20V of the first drive system 28 driving the VTOL rotors 18V decreases due to the output power of the VTOL electric motors 20V of the first drive system 28 being decreased. In contrast to this, the thrust generated due to the VTOL electric motors 20V of the second drive system 30 driving the VTOL rotors 18V increases due to the output power of the VTOL electric motors 20V of the second drive system 30 being increased. As a result, the sum of the thrust generated due to the VTOL electric motors 20V of the first drive system 28 driving the VTOL rotors 18V and the thrust generated due to the VTOL electric motors 20V of the second drive system 30 driving the VTOL rotors 18V is kept the same before and after the SOC equalization control.

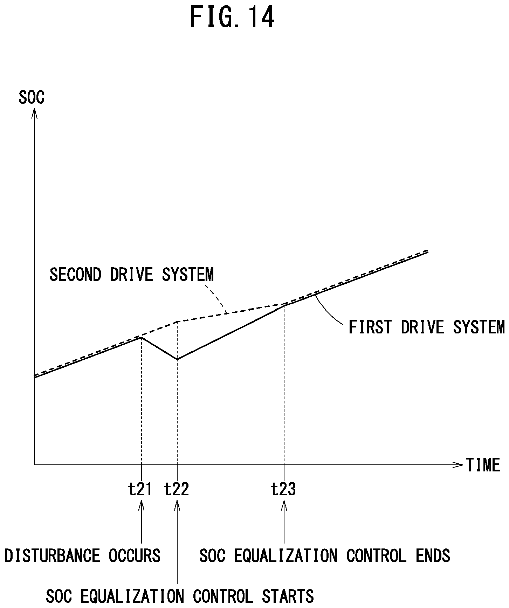

FIG. 14 is a graph showing the change over time of the SOC of each battery 50. The solid line in the graph of FIG. 14 indicates the change over time of the SOC of the batteries 50 of the first drive system 28. The dotted line in the graph of FIG. 14 indicates the change over time of the SOC of the batteries 50 of the second drive system 30.

A disturbance occurs at the timing t21, and the difference between the SOC of the batteries 50 of the first drive system 28 and the SOC of the batteries 50 of the second drive system 30 becomes greater than or equal to the first prescribed value at the timing t22. The SOC of the batteries 50 of the first drive system 28 at the timing t22 is less than the second prescribed value.

Therefore, at the timing t22, the SOC equalization control is started. The difference between the SOC of the batteries 50 of the first drive system 28 and the SOC of the batteries 50 of the second drive system 30 becomes smaller due to the SOC equalization control.

When the SOC of the batteries 50 of the first drive system 28 and the SOC of the batteries 50 of the second drive system 30 become approximately equal at the timing t23, the SOC equalization control ends.

### [Operational Effect]

With the flight controller 80 of the present embodiment, the electric motor control section 90 performs the SOC equalization control in the following case. The following case is a case where the difference between the SOC of the batteries 50 of the first drive system 28 and the SOC of the batteries 50 of the second drive system 30 is greater than or equal to the first prescribed value, and the SOC of the batteries 50 of the first drive system 28 is less than the second prescribed value.

Furthermore, if the SOC of the batteries 50 of the first drive system 28 is lower than the SOC of the batteries 50 of the second drive system 30, the electric motor control section 90 decreases the output power of the VTOL electric motors 20V of the first drive system 28 to be less than the output power command value. Due to this, the charged electric power of the batteries 50 of the first drive system 28 can be increased than before the output power of the VTOL electric motors 20V of the first drive system 28 is decreased. As a result, the SOC of the batteries 50 of the first drive system 28 and the SOC of the batteries 50 of the second drive system 30 can be made approximately equal.

In the manner described above, when the output power of the VTOL electric motors 20V of the first drive system 28 is decreased to be less than the output power command value, the thrust generated by the VTOL rotors 18V of the first drive system 28 is decreased.

Therefore, with the flight controller 80 of the present embodiment, the electric motor control section 90 increases the output power of the VTOL electric motors 20V of the second drive system 30, to be greater than the output power command value. Due to this, the thrust generated due to the VTOL electric motors 20V of the second drive system 30 driving the VTOL rotors 18V is increased by an amount corresponding to the amount of the decrease of the thrust generated due to the VTOL electric motors 20V of the first drive system 28 driving the VTOL rotors 18V. As a result, the sum of the thrust generated due to the VTOL electric motors 20V of the first drive system 28 driving the VTOL rotors 18V and the thrust generated due to the VTOL electric motors 20V of the second drive system 30 driving the VTOL rotors 18V can be kept the same before and after the SOC equalization control.

With the aircraft 10 of the present embodiment, among the VTOL rotors 18V arranged on the left side of the center line A of the fuselage 12, the number of VTOL rotors 18V driven by the VTOL electric motors 20V of the first drive system 28 and the number of VTOL rotors 18V driven by the VTOL electric motors 20V of the second drive system 30 are the same.

Due to this, when the output power of the VTOL electric motors 20V of the first drive system 28 is decreased and the output power of the VTOL electric motors 20V of the second drive system 30 is increased, the total thrust of the VTOL rotors 18V positioned on the left side of the fuselage 12 and the total thrust of the VTOL rotors 18V positioned on the right side of the fuselage 12 can be made approximately equal. Due to this, the attitude of the fuselage 12 can be stabilized.

The present invention is not limited to the above disclosure, and various modifications are possible without departing from the scope of the present invention defined by the appended claims.

In the flight controller 80 of the first embodiment, the sum of the thrust generated due to the cruise electric motors 24C of the first drive system 28 driving the cruise rotors 22C and the thrust generated due to the cruise electric motors 24C of the second drive system 30 driving the cruise rotors 22C is kept the same before and after the SOC equalization control. In contrast to this, the sum of the thrust generated due to the cruise electric motors 24C of the first drive system 28 driving the cruise rotors 22C and the thrust generated due to the cruise electric motors 24C of the second drive system 30 driving the cruise rotors 22C may be lower after the SOC equalization control than before the SOC equalization control.

In the first embodiment and the second embodiment, the first power supply circuit 38a and the second power supply circuit 38b are provided independently, and are not connected to each other. In contrast to this, the first power supply circuit 38a and the second power supply circuit 38b may be connected to each other. In such a case, each battery 50 is connected in parallel to both the first main power source apparatus 32a and the second main power source apparatus 32b. Therefore, even when the equalization control is not performed, the SOCs of the respective batteries 50 can be made approximately equal. However, the SOCs of the respective batteries can be made approximately equal in a short time by performing the equalization control.

In the first embodiment and the second embodiment, one cruise rotor 22C is provided on the left side and one cruise rotor 22C is provided on the right side of the center line A of the fuselage 12. In contrast to this, two cruise rotors 22C may be provided on the left side and two cruise rotors 22C may be provided on the right side of the fuselage 12. In such a case, one cruise rotor 22C is driven by one cruise electric motor 24C. Furthermore, one cruise rotor 22C may be provided in the center of the fuselage 12 in the left-right direction. In such a case, the one cruise rotor 22C is driven by two cruise electric motors 24C.

The VTOL rotors 18V and the cruise rotors 22C of the first embodiment and second embodiment may be coaxial rotors. One of the two coaxial rotors may be driven by the electric motor of the first drive system 28 and the other rotor may be driven by the electric motor of the second drive system 30.

### [Invention Obtainable from the Embodiments]

The invention that can be understood from the above embodiments will be described below.

Provided is the control apparatus (80) for the aircraft (10), the aircraft including: at least one power generator (46) configured to generate electric power; at least one first battery (50a, 50b) configured to store electric power; at least one first electric motor (20V1_1, 20V4_1, 20V5_1, 20V8_1, 24C1_1, 24C3_1) configured to operate using electric power supplied from the power generator and the first battery; at least one first diode (76) having the anode connected to the power generator side, and the cathode connected to the first battery side; at least one second battery (50c, 50d) configured to store electric power; at least one second electric motor (20V2_2, 20V3_2, 20V6_2, 20V7_2, 24C2_2, 24C4_2) configured to operate using electric power supplied from the power generator and the second battery; at least one second diode (76) having the anode connected to the power generator side, and the cathode connected to the second battery side; and the plurality of rotors (18V, 22C) configured to generate thrust acting on the fuselage (12). The control apparatus comprises: the electric motor control section (90) configured to control each of the first electric motor and the second electric motor; and the battery monitoring section (88) configured to monitor the SOC (State Of Charge) of each of the first battery and the second battery. Each of the rotors is driven by one of the first electric motor or the second electric motor, or by both the first electric motor and the second electric motor. In a case where the electric motor control section determines that the difference between the SOC of the first battery and the SOC of the second battery is greater than or equal to the first prescribed value, and the SOC of the first battery is lower than the SOC of the second battery, the electric motor control section is configured to decrease thrust generated due to the first electric motor driving the rotor to reduce consumed electric power of the first electric motor and also to increase thrust generated due to the second electric motor driving the rotor, compared to a case where the difference between the SOC of the first battery and the SOC of the second battery is less than the first prescribed value. Due to this, the SOCs of the respective batteries can be made approximately equal.

In the control apparatus for the aircraft described above, in a case where the electric motor control section determines that the difference between the SOC of the first battery and the SOC of the second battery is greater than or equal to the first prescribed value, the SOC of the first battery is lower than the SOC of the second battery, and the SOC of the first battery is less than the second prescribed value, the electric motor control section may be configured to decrease the thrust generated due to the first electric motor driving the rotor to reduce the consumed electric power of the first electric motor and also to increase the thrust generated due to the second electric motor driving the rotor, compared to the case where the difference between the SOC of the first battery and the SOC of the second battery is less than the first prescribed value. Due to this, the SOCs of the respective batteries can be made approximately equal.

In the aircraft described above, the first electric motor and the second electric motor may each drive the horizontal rotor (22C) configured to generate thrust in the horizontal direction; and in the case where the electric motor control section determines that the difference between the SOC of the first battery and the SOC of the second battery is greater than or equal to the first prescribed value, and the SOC of the first battery is lower than the SOC of the second battery, the electric motor control section may be configured to decrease the sum of thrust generated due to the first electric motor driving the horizontal rotor and thrust generated due to the second electric motor driving the horizontal rotor, compared to the case where the difference between the SOC of the first battery and the SOC of the second battery is less than the first prescribed value. Due to this, the SOCs of the respective batteries can be made approximately equal at an early stage.

In the aircraft described above, the first electric motor and the second electric motor may each drive the horizontal rotor configured to generate thrust in the horizontal direction; and in the case where the electric motor control section determines that the difference between the SOC of the first battery and the SOC of the second battery is greater than or equal to the first prescribed value, the SOC of the first battery is lower than the SOC of the second battery, and the SOC of the first battery is less than the second prescribed value, the electric motor control section may be configured to decrease the sum of thrust generated due to the first electric motor driving the horizontal rotor and thrust generated due to the second electric motor driving the horizontal rotor, compared to the case where the difference between the SOC of the first battery and the SOC of the second battery is less than the first prescribed value. Due to this, the SOCs of the respective batteries can be made approximately equal at an early stage.

In the aircraft described above, the number of the rotors arranged on one side of the center line of the fuselage in the left-right direction may be the same as the number of the rotors arranged on the other side of the center line; among the rotors arranged on the one side, the number of the rotors driven by the first electric motor may be the same as the number of the rotors driven by the second electric motor; and among the rotors arranged on the other side, the number of the rotors driven by the first electric motor may be the same as the number of the rotors driven by the second electric motor. Due to this, the magnitude of the thrust generated by the rotors can be made approximately equal on the left and right of the fuselage. As a result, the attitude of the fuselage can be stabilized.

In the aircraft described above, each of the rotors may be the vertical rotor (18V) configured to generate thrust in the vertical direction or the horizontal rotor configured to generate thrust in the horizontal direction. Due to this, the SOCs of the respective batteries serving as power sources of the electric motors driving the vertical rotors and horizontal rotors can be made approximately equal.

In the aircraft described above, at least one of the plurality of rotors may be the horizontal rotor configured to generate thrust in the horizontal direction; and the horizontal rotor may be driven by both the first electric motor and the second electric motor. Due to this, the SOCs of the respective batteries serving as power sources of the electric motors driving the horizontal rotors can be made approximately equal.
When a difference in the SOC among respective batteries (50) is greater than or equal to a first prescribed value, an electric motor control section (90) is configured to reduce output power of a cruise electric motor (24C) that operates using electric power of a battery (50) with a low SOC and increases output power of a cruise electric motor (24C) that operates using electric power of a battery (50) with a high SOC.

## Claims

1. A control apparatus (80) for an aircraft (10),
the aircraft including:
at least one power generator (46) configured to generate electric power;
at least one first battery (50a, 50b) configured to store electric power;
at least one first electric motor (20V1_1, 20V4_1, 20V5_1, 20V8_1, 24C1_1, 24C3_1) configured to operate using electric power supplied from the power generator and the first battery;
at least one first diode (76) including an anode connected to a side of the power generator, and a cathode connected to a side of the first battery;
at least one second battery (50c, 50d) configured to store electric power;
at least one second electric motor (20V2_2, 20V3_2, 20V6_2, 20V7_2, 24C2_2, 24C4_2) configured to operate using electric power supplied from the power generator and the second battery;
at least one second diode (76) including an anode connected to the side of the power generator, and a cathode connected to a side of the second battery; and
a plurality of rotors (18V, 22C) configured to generate thrust acting on a fuselage (12),
wherein the control apparatus comprises:
an electric motor control section (90) configured to control each of the first electric motor and the second electric motor; and
a battery monitoring section (88) configured to monitor a state of charge of each of the first battery and the second battery, and
wherein each of the rotors is driven by one of the first electric motor or the second electric motor, or by both the first electric motor and the second electric motor, **characterised in that**
in a case where the electric motor control section (90) determines that a difference between the state of charge of the first battery and the state of charge of the second battery is greater than or equal to a first prescribed value, and the state of charge of the first battery is lower than the state of charge of the second battery, the electric motor control section is configured to decrease thrust generated due to the first electric motor driving the rotor to reduce consumed electric power of the first electric motor and also to increase thrust generated due to the second electric motor driving the rotor, compared to a case where the difference between the state of charge of the first battery and the state of charge of the second battery is less than the first prescribed value.

2. The control apparatus for the aircraft according to claim 1, wherein
in a case where the electric motor control section (90) determines that the difference between the state of charge of the first battery and the state of charge of the second battery is greater than or equal to the first prescribed value, the state of charge of the first battery is lower than the state of charge of the second battery, and the state of charge of the first battery is less than a second prescribed value, the electric motor control section is configured to decrease the thrust generated due to the first electric motor driving the rotor to reduce the consumed electric power of the first electric motor and also to increase the thrust generated due to the second electric motor driving the rotor, compared to the case where the difference between the state of charge of the first battery and the state of charge of the second battery is less than the first prescribed value.

3. The aircraft as stated in claim 1 comprising the control apparatus for the aircraft according to claim 1, wherein
the first electric motor and the second electric motor each drive a horizontal rotor (22C) configured to generate thrust in a horizontal direction, and
in the case where the electric motor control section (90) determines that the difference between the state of charge of the first battery and the state of charge of the second battery is greater than or equal to the first prescribed value, and the state of charge of the first battery is lower than the state of charge of the second battery, the electric motor control section is configured to decrease a sum of thrust generated due to the first electric motor driving the horizontal rotor and thrust generated due to the second electric motor driving the horizontal rotor, compared to the case where the difference between the state of charge of the first battery and the state of charge of the second battery is less than the first prescribed value.

4. The aircraft as stated in claim 1 comprising the control apparatus for the aircraft according to claim 2, wherein
the first electric motor and the second electric motor each drive a horizontal rotor configured to generate thrust in a horizontal direction, and
in the case where the electric motor control section (90) determines that the difference between the state of charge of the first battery and the state of charge of the second battery is greater than or equal to the first prescribed value, the state of charge of the first battery is lower than the state of charge of the second battery, and the state of charge of the first battery is less than the second prescribed value, the electric motor control section is configured to decrease a sum of thrust generated due to the first electric motor driving the horizontal rotor and thrust generated due to the second electric motor driving the horizontal rotor, compared to the case where the difference between the state of charge of the first battery and the state of charge of the second battery is less than the first prescribed value.

5. The aircraft as stated in claim 1 comprising the control apparatus for the aircraft according to claim 1 or 2, or the aircraft according to claim 3 or 4, wherein
a number of the rotors arranged on one side of a center line of the fuselage in a left-right direction is equal to a number of the rotors arranged on another side of the center line,
among the rotors arranged on the one side, a number of the rotors driven by the first electric motor is equal to a number of the rotors driven by the second electric motor, and
among the rotors arranged on the other side, a number of the rotors driven by the first electric motor is equal to a number of the rotors driven by the second electric motor.

6. The aircraft as stated in claim 1 comprising the control apparatus for the aircraft according to claim 1 or 2, or the aircraft according to any of claims 3 to 5, wherein
each of the rotors is a vertical rotor (18V) configured to generate thrust in a vertical direction or a horizontal rotor configured to generate thrust in a horizontal direction.

7. The aircraft as stated in claim 1 comprising the control apparatus for the aircraft according to claim 1 or 2, or the aircraft according to any of claims 3 to 6, wherein
at least one of the plurality of rotors is a horizontal rotor configured to generate thrust in a horizontal direction, and
the horizontal rotor is driven by both the first electric motor and the second electric motor.

## Patentansprüche

1. Steuervorrichtung (80) für ein Flugzeug (10),
wobei das Flugzeug umfasst:
wenigstens einen Leistungsgenerator (46), welcher dazu eingerichtet ist,
elektrische Leistung zu erzeugen;
wenigstens eine erste Batterie (50a, 50b), welche dazu eingerichtet ist, elektrische Leistung zu speichern;
wenigstens einen ersten Elektromotor (20V1_1, 20V4_1, 20V5_1, 20V8_1, 24C1_1, 24C3_1), welcher dazu eingerichtet ist, unter Verwendung von elektrischer Leistung zu arbeiten, welche von dem Leistungsgenerator und der ersten Batterie geliefert wird;
wenigstens eine erste Diode (76), welche eine Anode, welche mit einer Seite des Leistungsgenerators verbunden ist, und eine Kathode umfasst, welche mit einer Seite der ersten Batterie verbunden ist;
wenigstens eine zweite Batterie (50c, 50d), welche dazu eingerichtet ist, elektrische Leistung zu speichern;
wenigstens einen zweiten Elektromotor (20V2_2, 20V3_2, 20V6_2, 20V7_2, 24C2_2, 24C4_2), welcher dazu eingerichtet ist, unter Verwendung von elektrischer Leistung zu arbeiten, welche von dem Leistungsgenerator und der zweiten Batterie geliefert wird;
wenigstens eine zweite Diode (76), welche eine Anode, welche mit der Seite des Leistungsgenerators verbunden ist, und eine Kathode umfasst, welche mit einer Seite der zweiten Batterie verbunden ist; und
eine Mehrzahl von Rotoren (18V, 22C), welche dazu eingerichtet sind, einen Schub zu erzeugen, welcher auf einen Rumpf (12) wirkt,
wobei die Steuervorrichtung umfasst:
einen Elektromotor-Steuerabschnitt (90), welcher dazu eingerichtet ist, jeden aus dem ersten Elektromotor und dem zweiten Elektromotor zu steuern; und
einen Batterie-Überwachungsabschnitt (88), welcher dazu eingerichtet ist, einen Ladungszustand von jeder aus der ersten Batterie und der zweiten Batterie zu überwachen, und
wobei jeder der Rotoren durch einen aus dem ersten Elektromotor oder dem zweiten Elektromotor angetrieben ist oder durch sowohl den ersten Elektromotor als auch den zweiten Elektromotor,
**dadurch gekennzeichnet, dass**
in einem Fall, in welchem der Elektromotor-Steuerabschnitt (90) bestimmt, dass eine Differenz zwischen dem Ladungszustand der ersten Batterie und dem Ladungszustand der zweiten Batterie größer oder gleich einem ersten vorbestimmten Wert ist und der Ladungszustand der ersten Batterie niedriger als der Ladungszustand der zweiten Batterie ist, der Elektromotor-Steuerabschnitt dazu eingerichtet ist, einen Schub zu verringern, welcher erzeugt wird, da der erste Elektromotor den Rotor antreibt, um eine verbrauchte elektrische Leistung des ersten Elektromotors zu reduzieren, und ebenfalls einen Schub zu erhöhen, welcher erzeugt wird, da der zweite Elektromotor den Rotor antreibt, verglichen mit einem Fall, in welchem die Differenz zwischen dem Ladungszustand der ersten Batterie und dem Ladungszustand der zweiten Batterie niedriger als der erste vorbestimmte Wert ist.

2. Steuervorrichtung für das Flugzeug nach Anspruch 1, wobei in einem Fall, in welchem der Elektromotor-Steuerabschnitt (90) bestimmt, dass die Differenz zwischen dem Ladungszustand der ersten Batterie und dem Ladungszustand der zweiten Batterie größer oder gleich dem ersten vorbestimmten Wert ist, der Ladungszustand der ersten Batterie niedriger als der Ladungszustand der zweiten Batterie ist und der Ladungszustand der ersten Batterie niedriger als ein zweiter vorbestimmter Wert ist, der Elektromotor-Steuerabschnitt dazu eingerichtet ist, den Schub zu verringern, welcher erzeugt wird, da der erste Elektromotor den Rotor antreibt, um die verbrauchte elektrische Leistung des ersten Elektromotors zu reduzieren, und ebenfalls den Schub zu erhöhen, welcher erzeugt wird, da der zweite Elektromotor den Rotor antreibt, verglichen mit dem Fall, in welchem die Differenz zwischen dem Ladungszustand der ersten Batterie und dem Ladungszustand der zweiten Batterie niedriger als der erste vorbestimmte Wert ist.

3. Flugzeug, wie in Anspruch 1 genannt, umfassend die Steuervorrichtung für das Flugzeug nach Anspruch 1, wobei
der erste Elektromotor und der zweite Elektromotor jeweils einen horizontalen Rotor (22C) antreiben, welcher dazu eingerichtet ist, Schub in einer horizontalen Richtung zu erzeugen, und
in dem Fall, in welchem der Elektromotor-Steuerabschnitt (90) bestimmt, dass die Differenz zwischen dem Ladungszustand der ersten Batterie und dem Ladungszustand der zweiten Batterie größer oder gleich dem ersten vorbestimmten Wert ist und der Ladungszustand der ersten Batterie niedriger als der Ladungszustand der zweiten Batterie ist, der Elektromotor-Steuerabschnitt dazu eingerichtet ist, eine Summe von Schub, welcher erzeugt wird, da der erste Elektromotor den horizontalen Rotor antreibt, und Schub, welcher erzeugt wird, da der zweite Elektromotor den horizontalen Rotor antreibt, zu verringern, verglichen mit dem Fall, in welchem die Differenz zwischen dem Ladungszustand der ersten Batterie und dem Ladungszustand der zweiten Batterie niedriger als der erste vorbestimmte Wert ist.

4. Flugzeug, wie in Anspruch 1 genannt, umfassend die Steuervorrichtung für das Flugzeug nach Anspruch 2, wobei
der erste Elektromotor und der zweite Elektromotor jeweils einen horizontalen Rotor antreiben, welcher dazu eingerichtet ist, Schub in einer horizontalen Richtung zu erzeugen, und
in dem Fall, in welchem der Elektromotor-Steuerabschnitt (90) bestimmt, dass die Differenz zwischen dem Ladungszustand der ersten Batterie und dem Ladungszustand der zweiten Batterie größer oder gleich dem ersten vorbestimmten Wert ist, der Ladungszustand der ersten Batterie niedriger als der Ladungszustand der zweiten Batterie ist und der Ladungszustand der ersten Batterie niedriger als der zweite vorbestimmte Wert ist, der Elektromotor-Steuerabschnitt dazu eingerichtet ist, eine Summe von Schub, welcher erzeugt wird, da der erste Elektromotor den horizontalen Rotor antreibt, und Schub, welcher erzeugt wird, da der zweite Elektromotor den horizontalen Rotor antreibt, zu verringern, verglichen mit dem Fall, in welchem die Differenz zwischen dem Ladungszustand der ersten Batterie und dem Ladungszustand der zweiten Batterie niedriger als der erste vorbestimmte Wert ist.

5. Flugzeug, wie in Anspruch 1 genannt, umfassend die Steuervorrichtung für das Flugzeug nach Anspruch 1 oder 2, oder Flugzeug nach Anspruch 3 oder 4, wobei eine Anzahl von Rotoren, welche an einer Seite einer Mittellinie des Rumpfs in einer Links-Rechts-Richtung angeordnet sind, gleich einer Anzahl von Rotoren ist, welche an einer anderen Seite der Mittellinie angeordnet sind,
unter den Rotoren, welche an der einen Seite angeordnet sind, eine Anzahl der Rotoren, welche durch den ersten Elektromotor angetrieben sind, gleich einer Anzahl der Rotoren ist, welche durch den zweiten Elektromotor angetrieben sind, und
unter den Rotoren, welche an der anderen Seite angeordnet sind, eine Anzahl der Rotoren, welche durch den ersten Elektromotor angetrieben sind, gleich einer Anzahl der Rotoren ist, welche durch den zweiten Elektromotor angetrieben sind.

6. Flugzeug, wie in Anspruch 1 genannt, umfassend die Steuervorrichtung für das Flugzeug nach Anspruch 1 oder 2, oder Flugzeug nach einem der Ansprüche 3 bis 5, wobei
jeder der Rotoren ein vertikaler Rotor (18V) ist, welcher dazu eingerichtet ist, Schub in einer vertikalen Richtung zu erzeugen, oder ein horizontaler Rotor ist, welcher dazu eingerichtet ist, Schub in einer horizontalen Richtung zu erzeugen.

7. Flugzeug, wie in Anspruch 1 genannt, umfassend die Steuervorrichtung für das Flugzeug nach Anspruch 1 oder 2, oder Flugzeug nach einem der Ansprüche 3 bis 6, wobei
wenigstens einer aus der Mehrzahl von Rotoren ein horizontaler Rotor ist, welcher dazu eingerichtet ist, Schub in einer horizontalen Richtung zu erzeugen, und der horizontale Rotor durch sowohl den ersten Elektromotor als auch den zweiten Elektromotor angetrieben ist.

## Revendications

1. Appareil de commande (80) pour un aéronef (10),
l'aéronef comportant :
au moins un générateur de puissance (46) configuré pour générer une puissance électrique ;
au moins une première batterie (50a, 50b) configurée pour stocker une puissance électrique ;
au moins un premier moteur électrique (20V1_1, 20V4_1, 20V5_1, 20V8_1, 24C1_1, 24C3_1) configuré pour fonctionner au moyen d'une puissance électrique fournie à partir du générateur de puissance et de la première batterie ;
au moins une première diode (76) comportant une anode connectée à un côté du générateur de puissance, et une cathode connectée à un côté de la première batterie ;
au moins une deuxième batterie (50c, 50d) configurée pour stocker une puissance électrique ;
au moins un deuxième moteur électrique (20V2_2, 20V3_2, 20V6_2, 20V7_2, 24C2_2, 24C4_2) configuré pour fonctionner au moyen d'une puissance électrique fournie à partir du générateur de puissance et de la deuxième batterie ;
au moins une deuxième diode (76) comportant une anode connectée au côté du générateur de puissance, et une cathode connectée à un côté de la deuxième batterie ; et
une pluralité de rotors (18V, 22C) configurée pour générer une poussée agissant sur un fuselage (12),
dans lequel l'appareil de commande comprend :
une section de commande de moteur électrique (90) configurée pour commander chacun du premier moteur électrique et du deuxième moteur électrique ; et
une section de surveillance de batterie (88) configurée pour surveiller un état de charge de chacune de la première batterie et de la deuxième batterie, et
dans lequel chacun des rotors est entraîné par l'un du premier moteur électrique ou du deuxième moteur électrique, ou par le premier moteur électrique et le deuxième moteur électrique, **caractérisé en ce que**
dans un cas où la section de commande de moteur électrique (90) détermine qu'une différence entre l'état de charge de la première batterie et l'état de charge de la deuxième batterie est supérieure ou égale à une première valeur prescrite, et l'état de charge de la première batterie est inférieur à l'état de charge de la deuxième batterie, la section de commande de moteur électrique est configurée pour diminuer une poussée générée en raison de l'entraînement du rotor par le premier moteur électrique pour réduire une puissance électrique consommée du premier moteur électrique et également augmenter une poussée générée en raison de l'entraînement du rotor par le deuxième moteur électrique, par rapport à un cas où la différence entre l'état de charge de la première batterie et l'état de charge de la deuxième batterie est inférieure à la première valeur prescrite.

2. Appareil de commande pour l'aéronef selon la revendication 1, dans lequel
dans un cas où la section de commande de moteur électrique (90) détermine que la différence entre l'état de charge de la première batterie et l'état de charge de la deuxième batterie est supérieure ou égale à la première valeur prescrite, l'état de charge de la première batterie est inférieur à l'état de charge de la deuxième batterie, et l'état de charge de la première batterie est inférieur à une deuxième valeur prescrite, la section de commande de moteur électrique est configurée pour diminuer la poussée générée par l'entraînement du rotor par le premier moteur électrique pour réduire la puissance électrique consommée du premier moteur électrique et également augmenter la poussée générée en raison de l'entraînement du rotor par le deuxième moteur électrique, par rapport au cas où la différence entre l'état de charge de la première batterie et l'état de charge de la deuxième batterie est inférieure à la première valeur prescrite.

3. Aéronef selon la revendication 1 comprenant l'appareil de commande pour l'aéronef selon la revendication 1, dans lequel
le premier moteur électrique et le deuxième moteur électrique entraînent chacun un rotor horizontal (22C) configuré pour générer une poussée dans une direction horizontale, et
dans le cas où la section de commande de moteur électrique (90) détermine que la différence entre l'état de charge de la première batterie et l'état de charge de la deuxième batterie est supérieure ou égale à la première valeur prescrite, et l'état de charge de la première batterie est inférieur à l'état de charge de la deuxième batterie, la section de commande de moteur électrique est configurée pour diminuer une somme d'une poussée générée en raison de l'entraînement du rotor horizontal par le premier moteur électrique et d'une poussée générée en raison de l'entraînement du rotor horizontal par le deuxième moteur électrique, par rapport au cas où la différence entre l'état de charge de la première batterie et l'état de charge de la deuxième batterie est inférieure à la première valeur prescrite.

4. Aéronef selon la revendication 1 comprenant l'appareil de commande pour l'aéronef selon la revendication 2, dans lequel
le premier moteur électrique et le deuxième moteur électrique entraînent chacun un rotor horizontal configuré pour générer une poussée dans une direction horizontale, et
dans le cas où la section de commande de moteur électrique (90) détermine que la différence entre l'état de charge de la première batterie et l'état de charge de la deuxième batterie est supérieure ou égale à la première valeur prescrite, l'état de charge de la première batterie est inférieur à l'état de charge de la deuxième batterie, et l'état de charge de la première batterie est inférieur à la deuxième valeur prescrite, la section de commande de moteur électrique est configurée pour diminuer une somme d'une poussée générée en raison de l'entraînement du rotor horizontal par le premier moteur électrique et d'une poussée générée en raison de l'entraînement du rotor horizontal par le deuxième moteur électrique, par rapport au cas où la différence entre l'état de charge de la première batterie et l'état de charge de la deuxième batterie est inférieure à la première valeur prescrite.

5. Aéronef selon la revendication 1 comprenant l'appareil de commande pour l'aéronef selon la revendication 1 ou 2, ou l'aéronef selon la revendication 3 ou 4, dans lequel
un nombre des rotors agencés sur un côté d'une ligne centrale du fuselage dans une direction gauche-droite est égal à un nombre des rotors agencés sur un autre côté de la ligne centrale,
parmi les rotors agencés sur le premier côté, un nombre des rotors entraînés par le premier moteur électrique est égal à un nombre des rotors entraînés par le deuxième moteur électrique, et
parmi les rotors agencés sur l'autre côté, un nombre des rotors entraînés par le premier moteur électrique est égal à un nombre des rotors entraînés par le deuxième moteur électrique.

6. Aéronef selon la revendication 1 comprenant l'appareil de commande pour l'aéronef selon la revendication 1 ou 2, ou l'aéronef selon l'une quelconque des revendications 3 à 5, dans lequel
chacun des rotors est un rotor vertical (18V) configuré pour générer une poussée dans une direction verticale ou un rotor horizontal configuré pour générer une poussée dans une direction horizontale.

7. Aéronef selon la revendication 1 comprenant l'appareil de commande pour l'aéronef selon la revendication 1 ou 2, ou l'aéronef selon l'une quelconque des revendications 3 à 6, dans lequel
au moins l'un de la pluralité de rotors est un rotor horizontal configuré pour générer une poussée dans une direction horizontale, et
le rotor horizontal est entraîné par le premier moteur électrique et le deuxième moteur électrique.
